(19) **Europäisches Patentamt / European Patent Office / Office européen des brevets**

(11) **EP 1 189 361 B1**

(12) **FASCICULE DE BREVET EUROPEEN**

(45) Date de publication et mention
de la délivrance du brevet:
**09.06.2010   Bulletin 2010/23**

(51) Int Cl.:
***H04B 1/707*** *(2006.01)*

(21) Numéro de dépôt: **01402353.5**

(22) Date de dépôt: **12.09.2001**

(54) **Méthode de détection multi-utilisateur**

Verfahren zur Mehrbenutzerdetektion

Method of multiuser detection

(84) Etats contractants désignés:
**AT BE CH CY DE DK ES FI FR GB GR IE IT LI LU MC NL PT SE TR**

(30) Priorité: **14.09.2000   FR 0011906**

(43) Date de publication de la demande:
**20.03.2002   Bulletin 2002/12**

(73) Titulaire: **Mitsubishi Electric R&D Centre Europe B.V.**
**1119 NS  Schiphol Rijk (NL)**

(72) Inventeur: **Mottier, David,**
**c/o Mitsubishi Electricité**
**35700 Rennes (FR)**

(74) Mandataire: **Maillet, Alain**
**Cabinet LE GUEN MAILLET**
**5, place Newquay**
**BP 70250**
**35802 Dinard Cedex (FR)**

(56) Documents cités:
**EP-A- 0 978 951**

- **NAGATSUKA M ET AL: "A SPATIALLY AND TEMPORALLY OPTIMAL MULTI-USER RECEIVER USING AN ARRAY ANTENNA FOR DS/CDMA" IEICE TRANSACTIONS ON COMMUNICATIONS,JP,INSTITUTE OF ELECTRONICS INFORMATION AND COMM. ENG. TOKYO, vol. E78-B, no. 11, 1 novembre 1995 (1995-11-01), pages 1489-1497, XP000555376 ISSN: 0916-8516**
- **BABAK H KHALAJ ET AL: "SPATIO-TEMPORAL CHANNEL ESTIMATION TECHNIQUES FOR MULTIPLE ACCESS SPREAD SPECTRUM SYSTEMS WITH ANTENNA ARRAYS" PROCEEDINGS OF THE CONFERENCE ON COMMUNICATIONS (ICC),US,NEW YORK, IEEE, 18 juin 1995 (1995-06-18), pages 1520-1524, XP000535015 ISBN: 0-7803-2487-0**
- **REED M C ET AL: "ITERATIVE MULTIUSER DETECTION USING ANTENNA ARRAYS AND FEC ON MULTIPATH CHANNELS" IEEE JOURNAL ON SELECTED AREAS IN COMMUNICATIONS,IEEE INC. NEW YORK,US, vol. 17, no. 12, décembre 1999 (1999-12), pages 2082-2089, XP000920304 ISSN: 0733-8716**

**Description**

La présente invention concerne de manière générale une méthode de détection multi-utilisateur (Multi User Detection ou MUD). Plus précisément, la présente invention a trait à une méthode itérative d'élimination de l'interférence entre utilisateurs (Multiple Access Interference ou MAI). La présente invention s'applique plus particulièrement à la téléphonie mobile en mode DS-CDMA (Direct Sequence - Code Division Multiple Access) c'est-à-dire à la téléphonie mobile utilisant un mode d'accès à répartition par codes avec étalement spectral par séquences directes.

Dans un système de téléphonie mobile DS-CDMA, la séparation des différents utilisateurs se fait en multipliant chaque symbole de l'utilisateur par une séquence d'étalement qui lui est propre, encore appelée pour cette raison signature de l'utilisateur, les différentes signatures étant idéalement choisies orthogonales. La fréquence de séquence d'étalement (chip rate) étant supérieure à la fréquence des symboles, le signal transmis par chaque utilisateur est distribué (ou étalé) dans l'espace des fréquences. A la réception, la séparation du signal d'un utilisateur est réalisée grâce à un filtrage adapté à la signature correspondante. Ce filtrage est également appelé « désétalement » (de-spreading). Le rapport entre la bande occupée par le signal étalé et la bande occupée par le signal d'information est appelé facteur d'étalement.

Les signatures employées doivent présenter des bonnes propriétés de corrélation à savoir un pic d'auto-corrélation très prononcé et de faibles valeurs d'inter-corrélation.

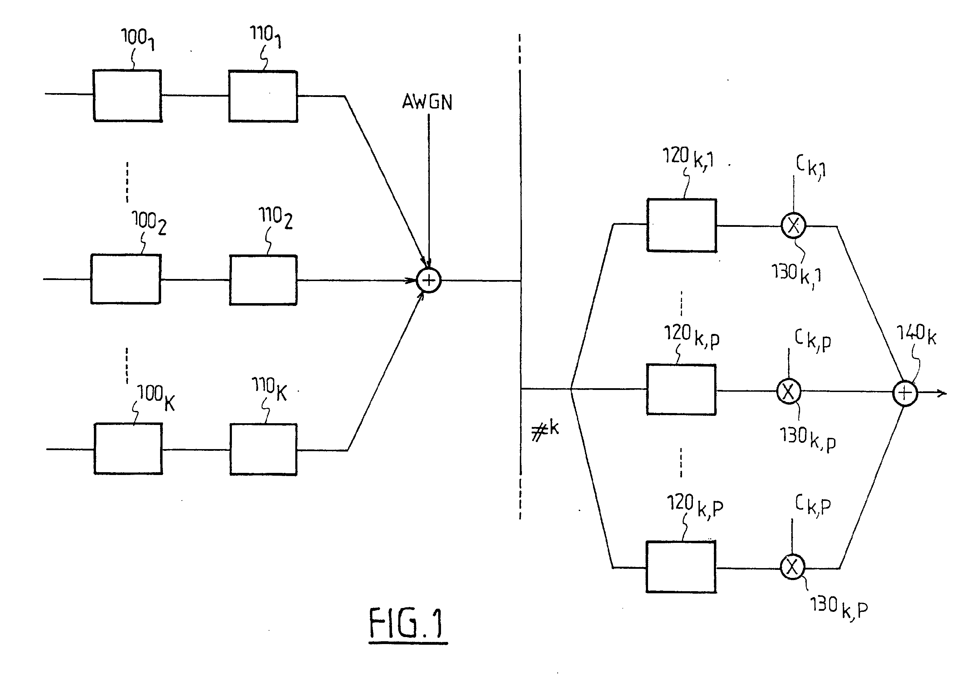

La première de ces deux caractéristiques permet la synchronisation de la séquence reçue. Elle est très utile lorsque le canal de transmission d'un utilisateur comporte plusieurs trajets de propagation. En effet, chaque trajet peut alors être isolé grâce à un filtrage adapté à la signature et au retard du trajet. On peut tirer parti de la diversité de propagation au sein du canal pour augmenter le rapport signal à bruit en réception. Pour ce faire, on utilise un banc de filtres adaptés séparant les différents trajets et on en combine les sorties. La combinaison la plus répandue est le MRC (*Maximum Ratio Combining*), qui consiste à multiplier le signal en sortie de chaque filtre adapté par le conjugué du coefficient multiplicatif complexe introduit par le canal sur le trajet concerné. L'opération de filtrage résultante est un filtrage adapté au filtre équivalent du canal. De par sa structure, le récepteur ainsi constitué est appelé récepteur en râteau ou récepteur Rake. Bien entendu, la séparation parfaite des trajets n'a lieu que si l'auto-corrélation est un Dirac. Dans la pratique cependant, la séparation n'est pas complète et laisse subsister une interférence multi-trajet que l'on appelle encore bruit propre (*Self noise*). La Fig. 1 représente de manière schématique un système DS-CDMA avec $K$ utilisateurs. Les données d'un utilisateur $k$ sont étalées en fréquence par la signature correspondante dans le module $100_k$ avant d'être transmises sur un canal $110_k$ comportant $P$ trajets. A la réception, pour un utilisateur $k$ donné, les signaux s'étant propagés selon les différents trajets $p=1..P$ du canal sont séparés par des filtres adaptés $120_{k,1}...120_{k,P}$ (seule la batterie de filtres de l'utilisateur $k$ a été représentée) avant d'être pondérés par un jeu de coefficients complexes $c_{k,p}$ Les signaux ainsi pondérés sont sommés $(140_k)$ et la somme résultante en sortie du récepteur Rake est ultérieurement détectée pour fournir une estimation des données de l'utilisateur $k$. Dans le cas d'une liaison descendante (liaisons d'une station de base vers un terminal mobile) les canaux 1 à $K$ sont identiques alors qu'ils diffèrent dans la liaison montante (liaisons de terminaux mobiles vers la station de base). Le premier cas peut, de ce point de vue, être considéré comme un cas particulier du second.

La seconde caractéristique énoncée plus haut garantit un faible niveau d'interférence entre deux utilisateurs distincts. Néanmoins, là aussi, en pratique, l'inter-corrélation entre deux signatures est rarement nulle. Cela est notamment le cas en situation dite d'éblouissement (*Near-far effect*) où un signal de forte puissance reçu d'un utilisateur perturbe la réception d'un signal de faible puissance provenant d'un autre utilisateur. D'autre part, lorsque le nombre d'utilisateurs est élevé, proche du facteur d'étalement, la somme des interférences des différents utilisateurs, faibles si on les prend isolément, peut avoir des effets très perturbateurs pour la détection.

Pour combattre l'interférence multi-utilisateur, plusieurs méthodes ont été proposées. On en trouvera une revue dans l'article de Simon Moshavi intitulé « Multi-user detection for DS-CDMA communications » paru dans IEEE Communications Magazine, Oct. 96, pages 124-136. Parmi les techniques multi-utilisateur existantes, les techniques d'élimination soustractive (Substractive Interference Cancellation) présentent de bonnes performances pour une complexité de mise en oeuvre raisonnable. L'idée générale en est simple : à partir d'une première détection en sortie de filtre adapté, on reconstruit par ré-étalement les contributions à l'interférence subie par les autres utilisateurs. On soustrait ensuite cette interférence au signal reçu pour fournir un signal épuré à une étape de détection ultérieure. Selon la manière dont la soustraction est effectuée, on distingue l'élimination parallèle (PIC pour *Parallel Interference Cancellation*) et l'élimination série des interférences (SIC pour *Serial Interference Cancellation*).

Nous supposons tout d'abord que le signal de chaque utilisateur se propage suivant un seul trajet jusqu'au récepteur.

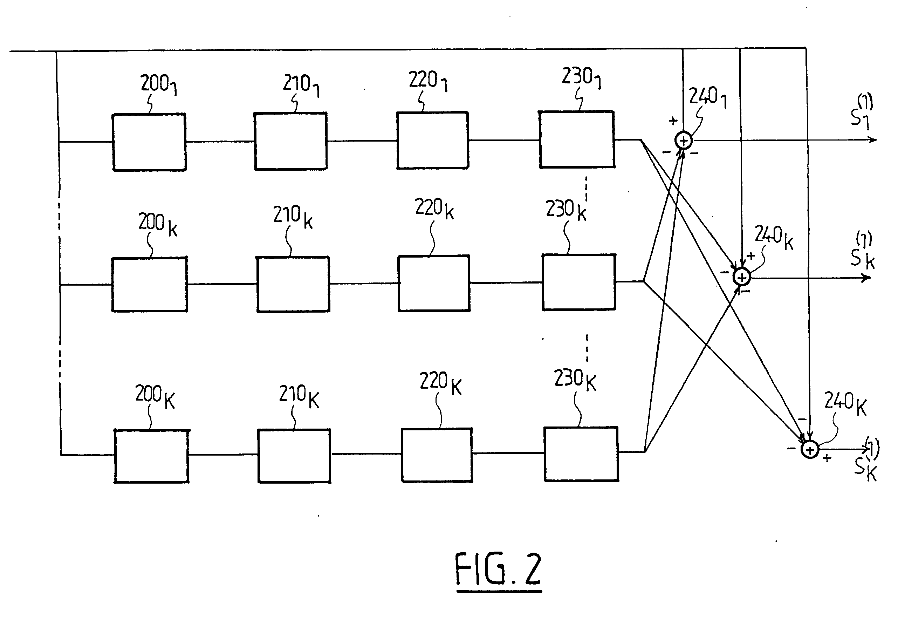

La méthode d'élimination parallèle est illustrée en Fig. 2: le signal reçu est filtré par une batterie de filtres adaptés $(200_1, 200_2,..,200_K)$, chaque filtre adapté étant relatif à un utilisateur donné. Après détection $(210_k)$, les symboles estimés sont réétalés $(220_k)$ spectralement au moyen de la signature de l'utilisateur en question avant d'être filtrés par un filtre modélisant le canal de transmission $(230_k)$. On dispose ainsi en sortie de $(230_k)$ d'une estimation de la part contributive du signal reçu attribuable à l'utilisateur $k$. On soustrait (en ($240_k$)) du signal reçu la somme des parts contributives des autres utilisateurs pour obtenir un signal épuré $S_k^{(1)}$. Ce signal épuré peut directement faire l'objet d'une détection après désétalement ou bien le processus d'élimination peut être itéré. La détection étant de meilleure qualité à chaque itération, on obtient alors, au fil des itérations successives, des signaux $S_k^{(i)}$ de mieux en mieux débarrassés de l'interférence multi-utilisateur.

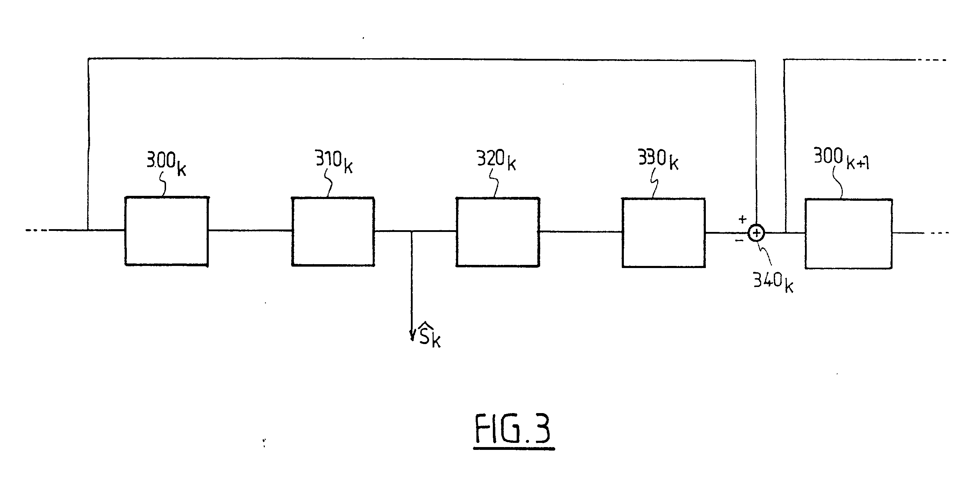

La méthode d'élimination série est illustrée en Fig. 3 : les signaux reçus par les différents utilisateurs sont tout d'abord ordonnés par ordre de puissance décroissante, soit $1,..,K$. On procède alors par éliminations successives des parts contributives en commençant par le signal de plus forte puissance. A cette fin, le détecteur SIC comporte une série d'étages en cascade, chacun éliminant l'interférence due à un utilisateur particulier. Le premier étage travaille sur le signal d'antenne et chaque étage ultérieur reçoit en entrée la sortie de l'étage précédent. Chaque étage comporte un filtre adapté ($300_k$), un détecteur ($310_k$), un module ($320_k$) de réétalement des symboles, un filtre ($330_k$) modélisant le canal de transmission k et un soustracteur ($340_k$) éliminant la contribution due à l'utilisateur $k$. Chaque étage fournit également en sortie du détecteur ($310_k$) une décision sur le symbole reçu, $\hat{S}_k$ et le processus d'élimination d'interférence prend fin au $K^{ième}$ étage.

Les techniques exposées ci-dessus s'appliquent bien à la situation simple où le canal de transmission d'un utilisateur comporte un seul trajet. Dans ce cas, le filtre modélisant le canal peut se limiter à la multiplication par un coefficient complexe. Lorsque les canaux sont multi-trajet, la situation est en revanche beaucoup plus complexe car il faut procéder à la fois à l'élimination de l'interférence multi-trajet et de l'interférence multi-utilisateur. Un détecteur itératif à élimination soustractive de l'interférence multi-utilisateur en présence de trajets multiples a été proposé dans un article de M.C. Reed et al. intitulé « Iterative Multiuser detection using antenna arrays and FEC on multipath channels » publié dans IEEE Journal on Selected Areas in Communications, Vol. 17, N˚12, Dec.'99, pages 2082-2089. Chaque itération de la détection comprend un filtrage adapté, une formation de voies et une combinaison de type Rake. La méthode proposée présuppose cependant que l'on détermine les coefficients d'atténuation, les rotations de phase ainsi que les directions d'arrivée de tous les trajets de tous les utilisateurs. Cette détermination est effectuée extérieurement au détecteur, préalablement à la séquence d'itérations et donc sur des signaux perturbés par les interférences multi-utilisateur et multi-trajet. Il en résulte que l'élimination de ces interférences est nécessairement approximative.

Un premier but de l'invention est de proposer une méthode et un dispositif de détection qui permettent l'élimination de l'interférence multi-utilisateur en présence de canaux multi-trajet sans nécessiter un calcul explicite des coefficients d'atténuation, rotations de phase et directions d'arrivée des trajets des différents utilisateurs.

Un second but de la présente invention est de proposer une méthode et un dispositif de détection qui améliorent l'élimination de l'interférence multi-utilisateur et multi-trajet.

De tels buts sont atteints par le détecteur multiutilisateurs décrit dans la demande de brevet EP-A-978 951. En particulier, ce document décrit une méthode de détection multi-utilisateur avec élimination d'interférence entre utilisateurs, chaque utilisateur transmettant des données modulées sous forme de symboles sur un canal de transmission, chaque canal de transmission comprenant au moins un trajet de propagation et chaque trajet de propagation arrivant sur un réseau d'antennes de réception selon une direction d'arrivée, la méthode comprenant au moins une séquence d'étapes pour chaque utilisateur, chaque séquence comprenant :

(a) une étape de réception décomposant chaque signal d'antenne en des signaux filtrés issus des différents trajets dudit utilisateur et combinant lesdits signaux filtrés au moyen d'une première pluralité de coefficients obtenus de manière adaptative pour former une estimation du signal transmis par l'utilisateur ;
(b) une étape d'estimation de la contribution de l'utilisateur aux signaux reçus par les différentes antennes à partir de ladite estimation du signal transmis et d'une seconde pluralité de coefficients ;
(c) une étape d'élimination d'interférence des signaux d'antennes épurés ; les signaux d'antennes épurés fournis par au moins une première séquence étant utilisés comme signaux d'antennes par au moins une seconde séquence.

Le problème que pose la méthode qui est utilisée par un tel détecteur multiutilisateurs est qu'elle nécessite la connaissance des paramètres du canal pour reconstruire les signaux reçus en bande de base de chacun des utilisateurs.

Le but de la présente invention est de proposer une telle méthode dans laquelle cette connaissance n'est plus nécessaire.

Pour ce faire, la présente invention est caractérisée en ce qu'à l'étape b), l'estimation de la contribution de l'utilisateur est faite à partir d'une seconde pluralité de coefficients qui sont obtenus à partir de ladite première pluralité de coefficients obtenus de manière adaptative. Selon un premier mode de réalisation, la première pluralité de coefficients comprend un premier jeu de coefficients complexes et un second jeu de coefficients complexes et que les signaux filtrés sont soumis à une étape de formation de voie pour former des signaux de trajets au moyen dudit premier jeu, lesdits signaux de trajets étant ensuite linéairement combinés au moyen dudit second jeu pour fournir ladite estimation du signal transmis, les coefficients dudit premier jeu étant adaptés de manière à minimiser une pluralité de premiers signaux d'erreur entre une valeur de consigne du signal transmis et lesdits signaux de trajets, les coefficients dudit second jeu étant adaptés de manière à minimiser un second signal d'erreur entre ladite estimation et ladite valeur de consigne.

Selon une caractéristique de l'invention, ladite seconde pluralité de coefficients comprend un premier jeu de coefficients complexes et un second jeu de coefficients complexes, les coefficients dudit premier jeu de la seconde pluralité étant obtenus à partir des arguments des coefficients du premier jeu de la première pluralité et les coefficients dudit second jeu de la seconde pluralité étant obtenus à partir des coefficients dudit second jeu de la première pluralité.

Avantageusement, les coefficients dudit premier jeu de la seconde pluralité sont obtenus à partir d'une régression linéaire sur les arguments des coefficients du premier jeu de la première pluralité.

Selon un second mode de réalisation de l'invention, la première pluralité de coefficients est constituée par un jeu de coefficients complexes et les signaux filtrés sont linéairement combinés au moyen dudit jeu pour fournir ladite estimation du signal transmis, les coefficients dudit jeu étant adaptés de manière à minimiser un signal d'erreur entre ladite estimation et une valeur de consigne. Selon une caractéristique de l'invention, ladite seconde pluralité ($w_{\ell,i,k}$, $u_{i,k}$) de coefficients comprend un premier jeu de coefficients complexes ($w_{\ell,i,k}$) et un second jeu de coefficients complexes ($u_{i,k}$), les coefficients ($u_{i,k}$) dudit second jeu de la seconde pluralité étant obtenus par : $u_{i,k} = g_{i,k}/g_k$ où $g_{i,k}$ est une estimation de la norme du sous-vecteur $\overline{\mathbf{b}}_{i,k} = \begin{pmatrix} b_{1,i,k} \\ b_{2,i,k} \\ \cdot \\ \cdot \\ b_{L,i,k} \end{pmatrix}$, L étant le nombre d'antennes du réseau, et où $g_k$ est une moyenne des

$g_{i,k}$ sur les différents trajets, les coefficients ($w_{\ell,i,k}$) dudit premier jeu de la seconde pluralité étant obtenus à partir des arguments des coefficients ($b_{\ell,i,k}$) dudit jeu de la première pluralité.

Selon une première variante de l'invention, pour un utilisateur donné, l'interférence est éliminée en soustrayant aux signaux d'antennes les contributions de tous les autres utilisateurs.

Avantageusement, chaque séquence comprend une étape d'estimation des symboles transmis à partir de l'estimation du signal transmis pour obtenir des premiers symboles estimés, une étape de démodulation des premiers symboles estimés pour obtenir des données estimées, une étape de décodage canal desdites données estimées suivi d'un recodage canal et d'une remodulation pour obtenir des seconds symboles estimés.

Selon une seconde variante de l'invention, les utilisateurs sont classés par ordre de puissance reçue et que l'interférence est éliminée en soustrayant l'une après l'autre les contributions des différents utilisateurs en commençant par les utilisateurs de plus fortes puissances reçues.

Avantageusement, les estimations des signaux transmis des utilisateurs étant considérées comme un vecteur d'estimations à K composantes où K est le nombre d'utilisateurs, ledit vecteur est soumis à un filtrage matriciel transverse .

En outre, les symboles estimés des utilisateurs étant considérés comme un vecteur de symboles à K composantes, ledit vecteur de symboles pourra être soumis à un filtrage matriciel postcurseur et la sortie de ce filtrage est soustraite, vecteur à vecteur, à la sortie du filtrage matriciel transverse .

L'invention est également définie par un dispositif de détection multi-utilisateur comprenant des moyens adaptés à mettre en oeuvre la méthode exposée ci-dessus.

Les caractéristiques de l'invention mentionnées ci-dessus, ainsi que d'autres, apparaîtront plus clairement à la lecture de la description faite en relation avec les figures jointes, parmi lesquelles :

La Fig. 1 représente de manière schématique un système de télécommunication DS-CDMA ;
La Fig. 2 représente de manière schématique un dispositif de détection multi-utilisateur de type PIC;
La Fig. 3 représente de manière schématique un dispositif de détection multi-utilisateur de type SIC ;
La Fig. 4 représente un premier récepteur de type Rake utile au dispositif selon l'invention ;
La Fig. 5 représente un second récepteur de type Rake utile au dispositif selon l'invention ;
La Fig. 6 représente un dispositif de détection multi-utilisateur selon un premier mode de réalisation de l'invention ;
La Fig. 7 représente un dispositif de détection multi-utilisateur selon un second mode de réalisation de l'invention ;
La Fig. 8a représente un dispositif de détection multi-utilisateur selon un troisième mode de réalisation de l'invention ;
La Fig. 8b représente de manière équivalente un dispositif de détection multi-utilisateur selon le troisième mode de réalisation de l'invention ;
La Fig. 9 représente un dispositif de détection multi-utilisateur selon un quatrième mode de réalisation de l'invention.

L'idée générale à la base de l'invention est de proposer une méthode adaptative de réception de type Rake, imbriquée dans un processus de détection multi-utilisateur. Le processus de rejection d'interférence bénéficie d'une précision accrue grâce à l'estimation des contributions respectives des différents utilisateurs dans le signal reçu. Réciproquement, le processus d'adaptation des coefficients complexes utilisés dans la méthode de réception de type Rake bénéficie de la réjection de l'interférence multi-utilisateur en opérant sur des signaux épurés.

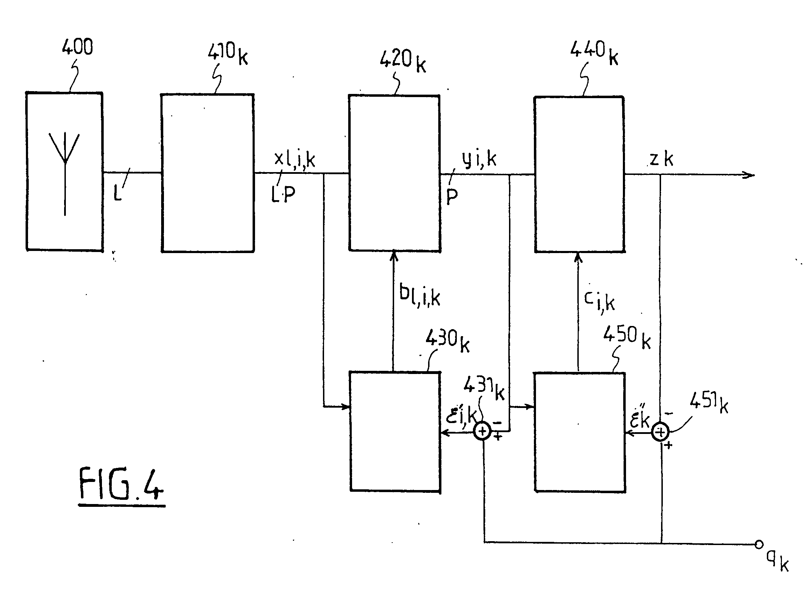

Selon une première variante, l'invention utilise un récepteur de type Rake tel qu'illustré en Fig. 4.

Le récepteur représenté est dédié à la réception des symboles transmis par un utilisateur $k$. Le système comporte $L$ antennes représentées schématiquement par le bloc (400). Chacun des $L$ signaux d'antennes est ensuite corrélé par une batterie de $P$ filtres adaptés où $P$ est le nombre de trajets de propagation du canal, chaque filtre étant adapté à un trajet $i$ donné. L'ensemble des $L.P$ filtres adaptés est schématisé par le bloc ($410_k$).

Si l'on note $x_{\ell,i,k}$ la contribution reçue par l'antenne $\ell$, $\ell=1,...,L$ attribuable à un trajet $i$, $i=1..P$ du canal $k$, $k=1..K$ on peut écrire:

$$x_{\ell,i,k}(t)=\alpha_{i,k}(t).e^{j\xi_{\ell,i,k}}.s_k(t)+n_{\ell,i,k}(t) \tag{1}$$

avec

$$\xi_{\ell,i,k}(t)=v_{i,k}(t)+(\ell-1).\varphi_{i,k}(t)=v_{i,k}(t)+2\pi\frac{d}{\lambda}(\ell-1)\cos\left(\theta_{i,k}(t)\right) \tag{2}$$

où $s_k(t)$ est le symbole émis par l'utilisateur $k$, $n_{\ell,i,k}(t)$ est le bruit supposé blanc additif gaussien au niveau de l'antenne $\ell$ pour le trajet $i$ de l'utilisateur $k$, incluant le bruit thermique, l'interférence multi-trajet et l'interférence multi-utilisateur, $d$ est le pas du réseau et $\lambda$ est la longueur d'onde.

La propagation suivant le trajet $i$ d'un signal émis par utilisateur $k$ peut ainsi être modélisée par un coefficient d'atténuation $\alpha_{i,k}(t)$ et une rotation de phase $v_{i,k}(t)$. Le déphasage total $\xi_{\ell,i,k}(t)$ résulte d'une part de la rotation de phase $v_{i,k}(t)$ induite sur le trajet $i$ et d'autre part de la différence de marche entre l'antenne $\ell$ et l'antenne de référence 1 sous l'angle d'arrivée $\theta_{i,k}(t)$

Les $L.P$ filtres adaptés fournissent les signaux $x_{\ell,i,k}$, $\ell=1..L$ , $i=1..P$, les signaux issus des filtres adaptés à un même trajet $i$ étant dirigés vers un formateur de voie associé à ce trajet. Les $P$ formateurs de voies sont représentés sous forme d'un seul bloc ($420_k$). Les signaux de sortie des formateurs de voie, $y_{i,k}$, s'écrivent :

$$y_{i,k}=\sum_{\ell=1}^{L}x_{\ell,i,k}.b_{\ell,i,k} \tag{3}$$

où $b_{\ell,i,k}$ sont des coefficients de pondération complexes. L'opération (3) peut encore s'écrire de manière équivalente sous la forme vectorielle suivante:

$$y_{i,k}(t)=\overline{b}_{i,k}(t)^{T}.\overline{x}_{i,k}(t)=\left(b_{1,i,k}(t)b_{2,i,k}(t)\cdot b_{L,i,k}(t)\right)\begin{pmatrix} x_{1,i,k}(t) \\ x_{2,i,k}(t) \\ \vdots \\ x_{L,i,k}(t) \end{pmatrix} \tag{3'}$$

où $b_{\ell,i,k}(t)=a_{\ell,i,k}.exp(-j\psi_{\ell,i,k})$ avec $\ell = (1,...,L)$

Dans un deuxième temps, les signaux de sortie, $y_{i,k}$, c'est-à-dire les différents trajets du signal de l'utilisateur $k$ sont combinés par le module ($440_k$) pour fournir un signal de combinaison $z_k$. Le signal de combinaison $z_k$ peut alors s'écrire:

$$z_k(t)=\overline{c}_k(t)^{T}.\overline{y}_k(t)=\left(c_{1,k}(t)c_{2,k}(t)\cdot c_{P,k}(t)\right)\begin{pmatrix} y_{1,k}(t) \\ y_{2,k}(t) \\ \vdots \\ y_{P,k}(t) \end{pmatrix} \tag{4}$$

où $c_{i,k}(t)=\rho_{i,k}.exp(-\zeta_{i,k})$ avec $i=(1,...,P)$ sont des coefficients de pondération complexes.

Les coefficients $b_{\ell,i,k}$ sont adaptés de manière à minimiser, en moyenne quadratique les signaux d'erreurs

exprimés par:

$$\varepsilon'_{i,k}(t)=q'_{i,k}(t)-y_{i,k}(t) \qquad (5)$$

De même, les coefficients $c_{i,k}$ sont adaptés de manière à minimiser, en moyenne quadratique, les signaux d'erreurs exprimés par :

$$\varepsilon''_k(t)=q''_k(t)-z_k(t) \qquad (6)$$

où $q'_{i,k}(t)$ et $q''_k(t)$ sont des valeurs de consigne correspondant aux observations en sortie de $(420_k)$ et $(440_k)$ respectivement. Les valeurs de consigne $q'_{i,k}(t)$ et $q''k(t)$ sont choisies égales :

$q'_{i,k}(t)=q''_k(t)=q_k(t)$ où $q_k(t)$ est une valeur de consigne commune qui ne dépend pas du trajet $i$.

Pour adapter les coefficients $b_{\ell,i,k}$ et $c_{i,k}$, on peut utiliser comme valeur de consigne commune $q_k(t)$, soit directement des symboles pilotes $p_k(t)$, soit des symboles estimés, avant ou après décodage canal, comme on le verra plus loin. Les deux possibilités de valeurs de consigne peuvent également se succéder, l'adaptation des coefficients $b_{\ell,i,k}$ et $c_{i,k}$ débutant alors avec des symboles pilotes et se poursuivant avec des symboles estimés.

Quoi qu'il en soit, au cours de l'adaptation, les coefficients sont modifiés de manière à minimiser les valeurs moyennes $E(|\varepsilon'_{i,k}|^2)$ et $E(|\varepsilon''_k|^2)$. Du fait de la rétroaction du signal d'erreur $\varepsilon'_{i,k}$, les valeurs $\psi_{\ell,i,k}$ convergent progressivement vers les valeurs $\nu_{i,k}+(\ell-1)\varphi_{i,k}$ et compensent par conséquent les déphasages dus au canal et aux différences de marche entre antennes. Il en résulte que les formateurs de voies ne se contentent pas de former des faisceaux dans les directions des différents trajets mais compensent également, au moins partiellement, les rotations de phase induites par les différents trajets. Un tel type de formateur de voie sera désigné par la suite « formateur de voie à pré-compensation de phase ». Le module $(440_k)$ effectue ensuite une combinaison sur les signaux de trajets pré-compensés en phase issus des formateurs de voies et corrige les reliquats de déphasage.

L'algorithme d'adaptation des coefficients est fondé sur une minimisation, en moyenne quadratique d'un signal d'erreur. De nombreux algorithmes ont été proposés à cette fin dans la littérature et l'on pourra en trouver une description des principaux dans l'article de revue de L.C. Godara intitulé « Application of antenna arrays to mobile communications, Part II : Beam-forming and direction-of-arrival considerations publié dans Proceedings of the IEEE, Vol. 85, N° 8, August '97, pages 1195-1245.

Par exemple, on pourra utiliser un algorithme de type LMS (Least Mean Square) ou bien un algorithme de type RLS (Recursive Least Square) comme exposé dans la demande française intitulée « Récepteur CDMA adaptatif bimodulaire» déposée au nom de la demanderesse.

Le récepteur décrit ci-dessus sera désigné par la suite comme « récepteur de premier type ».

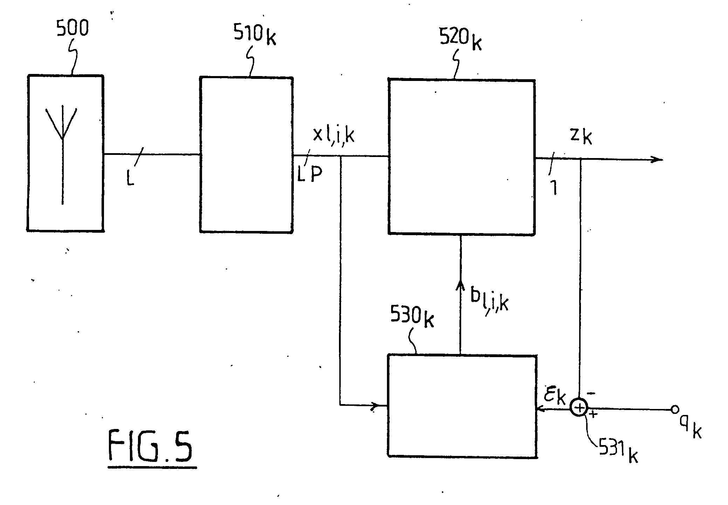

Selon une seconde variante, l'invention utilise un récepteur de type Rake tel qu'illustré en Fig. 5.

Le récepteur représenté est dédié à la réception des symboles transmis sur un canal $k$. Le système comporte $L$ antennes représentées schématiquement par le bloc (500). Chacun des $L$ signaux d'antennes est ensuite corrélé par une batterie de $P$ filtres adaptés où $P$ est le nombre de trajets de propagation du canal, chaque filtre étant adapté à un trajet $i$. L'ensemble des $L.P$ filtres adaptés est schématisé par le bloc $(510_k)$, les $L.P$ signaux de sortie, $x_{\ell,i,k}$, $\ell=1..L$, i=1..$P$ des filtres adaptés étant transmis vers un module combinant linéairement ces signaux de sortie par des coefficients complexes $b_{\ell,i,k}$ représenté par le bloc $(520_k)$ pour fournir un signal de combinaison $z_k$. Le module de combinaison $(520_k)$ effectue les opérations suivantes :

$$z_k=\sum_{i=1}^{P}\sum_{\ell=1}^{L}x_{\ell,i,k}.b_{\ell,i,k} \qquad (7)$$

où les $b_{\ell,i,k}(t)=a_{\ell,i,k}.\exp(-j\psi_{\ell,i,k})$ avec $\ell=1,..., L$, i=1..$P$, sont des coefficients de pondération complexes. L'équation (4) s'écrit de manière équivalente :

$$z_k(t)=\overline{\mathbf{b}}_k(t)^T\cdot\overline{\mathbf{x}}_k(t)=\left(b_{1,1,k}(t)b_{2,1,k}(t)\cdot b_{L,1,k}(t)..b_{1,P,k}(t)b_{2,P,k}(t)\cdot b_{L,P,k}(t)\right)\begin{pmatrix} x_{1,1,k}(t) \\ x_{2,1,k}(t) \\ \vdots \\ x_{L,1,k}(t) \\ \\ x_{1,P,k}(t) \\ \\ x_{L,P,k}(t) \end{pmatrix} \qquad (7')$$

Les coefficients $b_{\ell,i,k}$ sont adaptés de manière à minimiser, en moyenne quadratique, le signal d'erreur exprimé par:

$$\varepsilon_k(t)=q_k(t)-z_k(t) \qquad (8)$$

où $q_k(t)$ est une valeur de consigne correspondant au signal observé $z_k(t)$.

Pour adapter les coefficients $b_{\ell,i,k}$ on peut utiliser comme valeur de consigne, soit directement des symboles pilotes $p_k(t)$, soit des symboles estimés, avant ou après décodage canal, comme on le verra plus loin. Les deux possibilités de valeurs de consigne peuvent également se succéder, l'adaptation des coefficients $b_{\ell,i,k}$ débutant alors avec des symboles pilotes et se poursuivant avec des symboles estimés .

Au cours de l'adaptation, les coefficients $b_{\ell,i,k}$ sont modifiés de manière à minimiser la valeur moyenne $E(|\varepsilon_k|^2)$. Du fait de la rétroaction du signal d'erreur $\varepsilon_k$, les valeurs $\psi_{\ell,i,k}$ convergent progressivement vers les valeurs $v_{i,k}+(\ell-1)$ $\varphi_{i,k}$ *et* compensent par conséquent les déphasages dus au canal et aux différences de marche entre antennes. Il en résulte que le module ($520_k$) effectue à la fois une formation de voies et une compensation des rotations de phase induites par les différents trajets. En outre, le module ($520_k$) effectue une pondération réelle des contributions des différents trajets de chaque utilisateur.

L'algorithme d'adaptation pourra être, là aussi, un algorithme de type LMS (Least Mean Square) ou bien un algorithme de type RLS (Recursive Least Square) comme exposé dans la demande française intitulée « Récepteur CDMA adaptatif unimodulaire » déposée au nom de la demanderesse.

Le récepteur décrit ci-dessus sera désigné par la suite comme « récepteur de second type ».

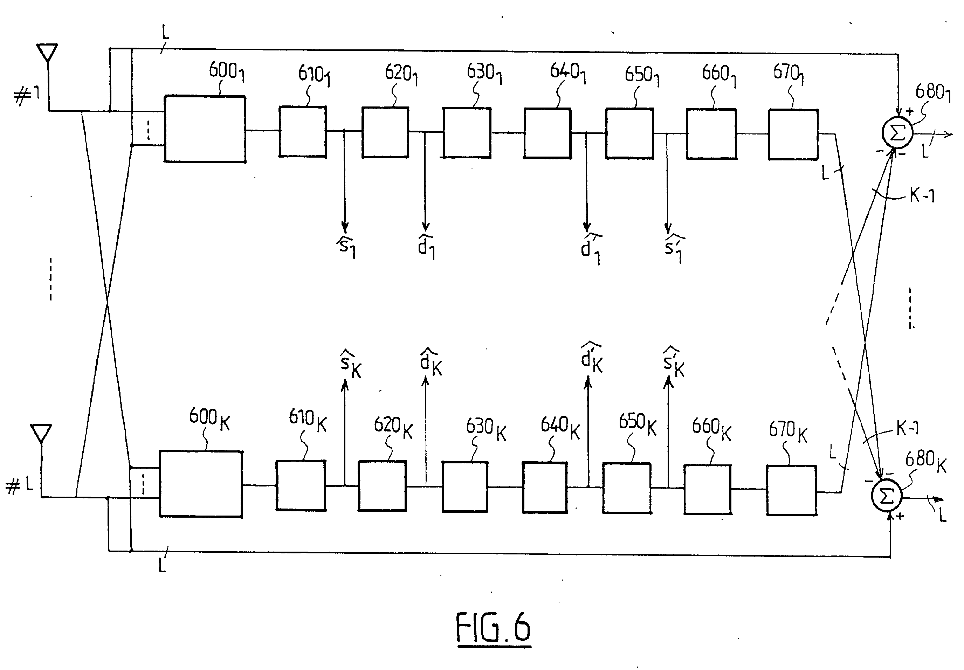

La Fig. 6 représente un dispositif de détection multi-utilisateur selon un premier exemple de réalisation de l'invention. L'interférence multi-utilisateur y est éliminée selon un mode parallèle.

Les sorties des antennes 1..*L* du réseau sont toutes reliées à une batterie de récepteurs ($600_1$,...,$600_K$) du premier type ou du second type, tels qu'illustrés respectivement en Figs. 4 et 5. Les signaux obtenus en sortie de ces récepteurs sont ensuite soumis à une séquence d'étapes de traitement. Cette séquence comprend tout d'abord une étape de décision ($610_1$,...,$610_K$) fournissant sous forme souple ou dure une estimation des symboles transmis par les différents utilisateurs, soit $\hat{s}_k(t)$ . Si les décisions sur les symboles prises en ($610_k$) sont à valeurs souples, les symboles estimés $\hat{s}_k(t)$ s'expriment comme une pondération de symboles de la constellation par leurs probabilités a posteriori respectives. Si les décisions sur les symboles prises en ($610_k$) sont à valeurs dures, les symboles estimés $\hat{s}_k(t)$ résultent d'un seuillage du signal observé $z_k(t)$ suivi, éventuellement, d'une pondération par un facteur déterminé a priori. Les symboles estimés sont ensuite démodulés ($620_1$,...,$620_K$) pour fournir des données estimées $\hat{d}k(t)$. Les données estimées sont soumises à une étape de désentrelacement et de décodage canal ($630_1$,...,$630_K$) puis recodées et entrelacées à nouveau ($640_1$,...,$640_K$) pour fournir une estimation plus fiable des données codées. Avantageusement, l'opération de décodage est effectuée au moyen d'un décodage à entrées et à sorties souples (SISO pour Soft Input Soft Output). Il est à noter que le recodage n'est pas nécessaire si l'on récupère directement les données encodées en sortie de décodage. Par exemple, si l'on utilise en ($630_1$,...,$630_K$) un algorithme de type SOVA (Soft Output Viterbi Algorithm) les données codées peuvent être récupérées directement le long du chemin de maximum de vraisemblance. Les données nouvellement estimées $\hat{d}_k(t)$ sont remodulées ($650_k$) et les symboles obtenus, $\hat{s}'_k(t)$, sont réétalés spectralement ($660_k$) par la signature de l'utilisateur *k*. Bien entendu, si le décodage utilisé est à valeurs souples, la remodulation est également « souple » au sens où elle fournit des symboles résultant de la pondération de symboles de la constellation, pondérés par leurs probabilités a posteriori respectives. Chaque symbole réétalé $\hat{s}'_k(t)$ est ensuite filtré par un filtre ($670_k$), dont la fonction sera explicitée plus loin, ayant pour rôle de modéliser l'effet du canal de transmission *k* et des différences de marche entre antennes. On dispose ainsi en sortie du filtre (670$_k$) d'une estimation de la « contribution » de l'utilisateur *k* aux *L* signaux d'antennes, ladite contribution se présentant sous la forme d'un L-uplet de signaux $(x_{\ell,k})_{\ell=1..L}$.

On retranche ensuite en (680$_k$), pour chaque utilisateur *k*, au L-uplet de signaux ($x\ell$) reçus par les *L* antennes, le L-uplet $\left(\sum_{k'\neq k} x_{\ell,k'}\right)$ pour éliminer la contribution due aux autres utilisateurs. On obtient ainsi *K* L-uplets de signaux d'antennes partiellement débarrassés de l'interférence multi-utilisateur. Le processus d'élimination peut être itéré en répétant la séquence (600$_k$)..(670$_k$) à partir de ces signaux et en retranchant à chaque fin d'itération, aux signaux ($x_\ell$) reçus par les antennes, les contributions nouvellement calculées. Chaque séquence d'un utilisateur de la seconde itération et des itérations suivantes opère sur un jeu (L-uplet) de signaux d'antennes dont les contributions des autres utilisateurs ont été éliminées à l'itération précédente. L'estimation des symboles transmis par les différents utilisateurs gagne ainsi en fiabilité au fil des itérations.

Il est à noter que les opérations de démodulation, désentrelacement, décodage/codage canal, entrelacement et remodulation sont optionnelles (les blocs 620$_k$, 630$_k$, 640$_k$, 650$_k$ sont alors absents). Le réétalement spectral peut s'appliquer directement au symbole estimé $\hat{s}_k(t)$. Toutefois, l'utilisation d'un décodage canal (avec bien entendu codage canal correspondant à l'émission) permet d'abaisser le taux d'erreurs et donc d'améliorer la fiabilité de l'estimation de l'interférence et, par suite, celle des symboles transmis.

La structure du filtre (670$_k$) dépend du type de récepteur utilisé en (600$_k$). Nous examinerons successivement les deux types de récepteurs envisagés :

Si le filtre (600$_k$) est du premier type, le filtre (670$_k$) effectue les opérations suivantes :

$$x_{\ell,k}(t)=\sum_{i=1}^{P} w_{\ell,i,k}(t).u_{i,k}(t).\breve{s}'(t-\hat{\tau}_{i,k}) \qquad (9)$$

où les : $\hat{\tau}_{i,k}$ sont les temps de retard estimés des différents trajets *i* du canal *k* obtenus à partir des écarts temporels entre les pics de corrélation calculés en (410$_k$);

$u_{i,k}$ sont des coefficients complexes de pondération modélisant le canal « apparent », c'est-à-dire dont les différents trajets ont été pré-compensés en phase, vu par le module (440$_k$) de recombinaison de trajets ;

$w_{\ell,i,k}$ sont des coefficients complexes de pondération modélisant les différences de marche entre antennes et la pré-compensation de phase du module (420$_k$).

Selon une première variante de réalisation de l'invention, les coefficients $u_{i,k}$ sont choisis tels que : $u_{i,k}=c^*_{i,k}$, de manière analogue à l'algorithme MRC appliqué à la recombinaison de trajets. On reconstruit ainsi des termes multiplicatifs du canal correspondants aux atténuations et aux reliquats de déphasage appliqués dans (440$_k$).

Selon une seconde variante de réalisation, on considère que les reliquats de déphasage sont négligeables et donc que les coefficients $c_{i,k}$ sont essentiellement réels. On choisit alors :

$$u_{i,k}=|c_{i,k}| \text{ ou bien } u_{i,k}=c_{i,k} \text{ ou encore } u_{i,k}=\text{Re}[c_{i,k}] \qquad (10)$$

où Re[.] représente la partie réelle.

De la même façon, on considère les coefficients $b_{\ell,i,k}$ comme des déphasages purs. Les termes $w_{\ell,i,k}$ alors sont choisis de manière à reconstruire les déphasages correspondants aux coefficients $b_{\ell,i,k}$ appliqués dans (420$_k$).

Selon une première variante de réalisation, on choisit alors :

$$w_{\ell,i,k}=\exp(j\psi_{\ell,i,k}) \text{ où } \psi_{\ell,i,k}=\text{Arctan}(\text{Im}[b_{\ell,i,k}]/\text{Re}[b_{\ell,i,k}]) \qquad (11)$$

Selon une seconde variante de l'invention, on effectue une régression linéaire sur les valeurs $\psi_{\ell,i,k}$ telle que décrite dans la demande française FR-A-0011160 déposée le 29.8.2000 au nom de la demanderesse et incorporée ici par référence. Plus précisément, pour un trajet $i$ donné, on cherche les valeurs $\hat{\nu}_{i,k}$ et $\varphi_{i,k}$ qui minimisent l'écart quadratique J :

$$J(\hat{\nu}_{i,k}, \hat{\varphi}_{i,k}) = \sum_{\ell=1}^{L} \left( \hat{\nu}_{i,k} + (\ell-1).\hat{\varphi}_{i,k} - \psi_{\ell,i,k} \right)^2 \tag{12}$$

Ces deux valeurs sont obtenues par annulation des dérivées partielles de la fonction $J$, on obtient alors :

$$\hat{\nu}_{i,k} = \overline{\psi}_{i,k} - \hat{\varphi}_{i,k}.\overline{(\ell-1)} \tag{13}$$

avec

$$\overline{\psi}_{i,k} = \frac{1}{L}\sum_{\ell=1}^{L}\psi_{\ell,i,k} \quad \text{et} \quad \overline{\ell-1} = \frac{1}{L}\sum_{\ell=1}^{L}(\ell-1)$$

et

$$\hat{\varphi}_{i,k} = \frac{\overline{(\ell-1).\psi_{\ell,i,k}} - \overline{\psi}_{\ell,i,k}.\overline{\ell-1}}{\overline{(\ell-1)^2} - \overline{\ell-1}^2} \tag{14}$$

où $\overline{X}$ désigne la moyenne de $X$ sur les $L$ antennes. Grâce à l'équation (13), on peut alors calculer $\hat{\nu}_{i,k}$. A partir des valeurs $\hat{\nu}_{i,k}$ et $\hat{\varphi}_{i,k}$ on choisit alors :

$$w_{\ell,i,k} = \exp(j(\hat{\nu}_{i,k} + (\ell-1).\hat{\varphi}_{i,k})) \tag{15}$$

ce qui donne une estimation moins bruitée que celle fournie par l'équation (11).

Si maintenant le filtre ($600_k$) est du second type, le filtre ($670_k$) effectue les opérations suivantes :

$$x_{\ell,k}(t) = \sum_{i=1}^{P} w_{\ell,i,k}(t).u_{i,k}(t).\check{s}'(t-\hat{\tau}_{i,k}) \tag{16}$$

Les coefficients $u_{i,k}$ sont obtenus en considérant que l'énergie du diagramme de rayonnement du formateur de voie relatif à un trajet est proportionnelle à l'atténuation subie par le signal le long de ce trajet. Si l'on note :

$$\overline{\mathbf{b}}_{i,k}=\begin{pmatrix}b_{1,i,k}\\b_{2,i,k}\\\cdot\\\cdot\\b_{L,i,k}\end{pmatrix}, \quad g_{i,k}=\left\|\overline{\mathbf{b}}_{i,k}\right\| \quad \text{et} \quad g_k=\sqrt{\frac{1}{P}\sum_{i=1}^{P}g_{i,k}^2} \tag{17}$$

on choisit alors $u_{i,k}=g_{i,k}/g_k$

La norme $g_{i,k}$ peut, par exemple, être approximée par $g_{i,k}=\max\limits_{\ell}\left|b_{\ell,i,k}\right|$ ou par $g_{i,k}=\overline{b}_{\ell,i,k}=1/L.\sum\limits_{\ell=1}^{L}b_{\ell,i,k}$ .

Les coefficients $w_{\ell,i,k}$ sont obtenus, quant à eux, comme précédemment par l'équation (11): $w_{\ell,i,k}=\exp(j\psi_{\ell,i,k})$ où $\psi_{\ell,i,k}=\mathrm{Arctan}(\mathrm{Im}[b_{\ell,i,k}]/\mathrm{Re}[b_{\ell,i,k}])$ avec éventuellement élimination du bruit de phase par régression linéaire, comme indiqué par les relations (12) à (15).

Que l'on emploie un filtre du premier ou du second type, les coefficients $b_{\ell,i,k}$ et, le cas échéant, $c_{i,k}$, doivent être initialisés à chaque itération.

Pour la première itération, les coefficients seront initialisés par les valeurs :

pour un récepteur du premier type :

$$b_{\ell,i,k}(0)=\delta(\ell-\ell_0),\forall i \quad \text{et} \quad c_{i,k}(0)=c,\forall i \tag{18}$$

où $\delta$ est le symbole de Dirac, $\ell_0$ est un numéro d'antenne et c un coefficient complexe donné ;

pour un récepteur du second type :

$$b_{\ell,i,k}(0)=b\cdot\delta(\ell-\ell_0),\forall i \tag{19}$$

où $\delta$ est le symbole de Dirac, $\ell_0$ est un numéro d'antenne et $b$ un coefficient complexe donné.

Dans les deux cas, la configuration initiale choisie est une configuration omni-directionelle multi-trajet.

Alternativement, si l'on dispose d'une estimation initiale des coefficients d'atténuations, directions d'arrivée et rotations de phase des différents trajets, on pourra initialiser les coefficients, à la première itération, par les valeurs:

pour un récepteur du premier type :

$$b_{\ell,i,k}(0)=\exp(-j(\hat{\nu}_{i,k}(0)+2\pi d/\lambda.\cos\hat{\theta}_{i,k}(0).(\ell-1))) \text{ et } c_{i,k}(0)=\hat{\alpha}_{i,k}(0) \tag{20}$$

pour un récepteur du second type :

$$b_{\ell,i,k}(0)=\hat{\alpha}_{i,k}(0).\exp(-j(\hat{\nu}_{i,k}(0)+2\pi d/\lambda.\cos\hat{\theta}_{i,k}(0).(\ell-1))) \tag{21}$$

où $\hat{\theta}_{i,k}(0)$ , $\hat{\nu}_{i,k}(0)$ , $\hat{\alpha}_{i,k}(0)$ sont respectivement les estimations initiales des directions d'arrivée, rotations de phase et coefficients d'atténuation pour les différents trajets.

A la seconde itération et aux itérations ultérieures les coefficients $b_{\ell,i,k}$ et, le cas échéant, $c_{i,k}$ sont initialisés par les valeurs des coefficients obtenues en fin d'adaptation à l'itération précédente. Plus précisément, si l'on convient d'initialiser le temps à zéro au début de chaque nouvelle itération et si l'on note T la longueur du bloc de symboles traités par une itération, on choisit :

$$b^{(n)}{}_{\ell,i,k}(0)=b^{(n-1)}{}_{\ell,i,k}(T) \tag{22}$$

où l'indice $n$ indique le numéro de l'itération.

Si le processus d'adaptation n'a pas convergé à l'itération précédente, c'est-à-dire, par exemple, si les modules du ou des signaux d'erreur sont supérieurs à un seuil prédéterminé au cours de cette itération, on pourra préférer réinitialiser lesdits coefficients à des valeurs données par (18), (19) ou (20), (21). On pourra également utiliser comme valeurs initiales, une moyenne, éventuellement pondérée par un coefficient d'oubli δ, des valeurs finales des itérations précédentes, soit encore :

$$b^{(n)}{}_{\ell,i,k}(0)=\sum_{m=1}^{M}\delta^{m}b^{(n-m)}{}_{\ell,i,k}(T) \tag{23}$$

Après la phase d'initialisation des coefficients, il importe de préciser quelles consignes $q_k(t)$ sont utilisées par les récepteurs ($600_k$) : on pourra utiliser des symboles pilotes ou des symboles $\hat{s}_k$ obtenus après décision souple ou dure en sortie de ($610_k$) ou bien encore des symboles obtenus après décodage/recodage canal en sortie de ($650_k$). Afin de ne pas retarder la contre-réaction du signal d'erreur par l'attente des opérations ($610_k$) à ($650_k$), les valeurs des symboles obtenues à l'itération précédente seront avantageusement utilisées, c'est-à-dire :

$$q^{(n)}{}_k(t)=\hat{s}'^{(n-1)}{}_k(t) \tag{24}$$

où $q^{(n)}{}_k(t)$ désigne la consigne utilisée au temps $t$ de l'itération $n$.

On peut également envisager de prendre comme consigne une moyenne pondérée entre un symbole en sortie de ($610_k$) de l'itération courante et le symbole correspondant en sortie de ($650_k$) de l'itération précédente soit :

$$q^{(n)}{}_k(t)=\eta.\hat{s}'^{(n-1)}{}_k(t)+(1-\eta).\hat{s}^{(n)}{}_k(t)$$

où η est un coefficient de pondération ($0 \le \eta \le 1$).

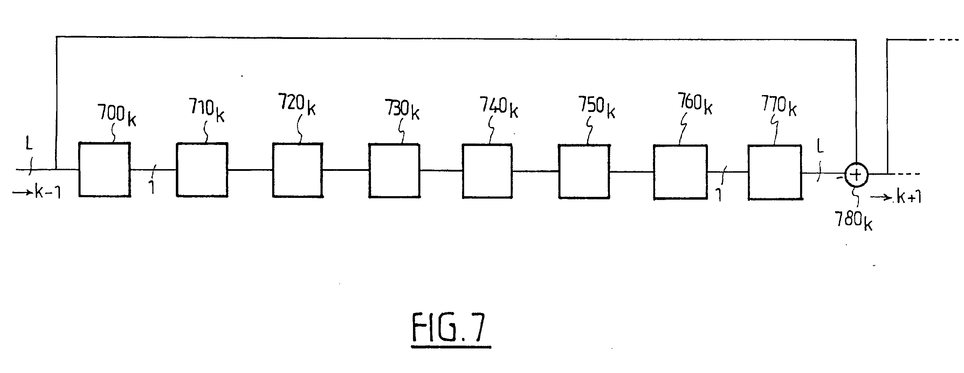

La Fig. 7 illustre un dispositif de détection multi-utilisateur selon un second exemple de réalisation de l'invention.

A la différence de la Fig. 6, l'élimination de l'interférence est ici réalisée en une série de $K$ étapes, $K$ étant le nombre d'utilisateurs. Les contributions des différents utilisateurs aux signaux reçus sont ordonnées par ordre de puissance décroissant. Pour chaque utilisateur, on sommera par exemple les modules au carré des sorties des filtres adaptés de l'utilisateur reliés aux différentes antennes et l'on comparera les sommes obtenues.

Pour simplifier le schéma un seul étage a été représenté, chaque étage effectuant une étape d'élimination. Chaque étage comporte en entrée un récepteur ($700_k$) du premier type ou du second type, tels qu'illustrés respectivement en Figs. 4 et 5. Le récepteur du premier étage reçoit les $L$ signaux d'antennes et le récepteur d'un étage ultérieur reçoit les $L$ signaux de sortie de l'étage précédent. En sortie du récepteur, on procède comme déjà décrit pour la Fig. 6 à une décision souple ou dure sur les symboles ($710_k$), une démodulation ($720_k$), un désentrelacement et un décodage canal ($730_k$), un recodage canal et entrelacement ($740_k$), une remodulation ($750_k$) et un réétalement ($760_k$) des symboles puis un filtrage de reconstruction ($770_k$). Les filtres ($770_k$) sont identiques au filtres ($670_k$) déjà décrits. Les $L$ signaux de sortie de ($770_k$) sont ensuite soustraits en ($780_k$) aux $L$ signaux d'entrée de l'étage k pour fournir les L signaux d'entrée de l'étage $k$+1. On élimine ainsi successivement les contributions des différents utilisateurs en commençant par celles qui créent les plus fortes interférences. Les sorties des filtres de reconstruction ($770_k$) des différents étages 1..$K$ peuvent être utilisées, comme celles des filtres de reconstruction ($670_k$) de la Fig. 6, afin de régénérer, pour chaque utilisateur $k$, sa contribution aux signaux d'antennes, sous la forme d'un L-uplet ($x_{\ell,k}$). Les contributions des différents utilisateurs sont soustraites une à une par les sommateurs ($780_k$) des différents étages.

Les remarques faites ci-dessus concernant l'initialisation des coefficients pour la première itération s'appliquent ici pour les séquences des différents utilisateurs. Autrement dit, à chaque séquence d'un utilisateur on initialise les coefficients par (18) ou (20) si le récepteur utilisé est du premier type et par (19) ou (21) si le récepteur utilisé est du second type.

En outre, on peut envisager de faire suivre une phase d'élimination série (Fig. 7) par une phase l'élimination parallèle (Fig. 6). Plus généralement, on peut grouper les canaux par « paquets » correspondant à des utilisateurs de même région spatiale ou de puissances voisines, on peut traiter les interférences entre paquets tout d'abord, puis les interférences entre utilisateurs de même paquet ensuite. Le traitement inter-paquet peut être d'un type (série ou parallèle) distinct de celui intra-paquet.

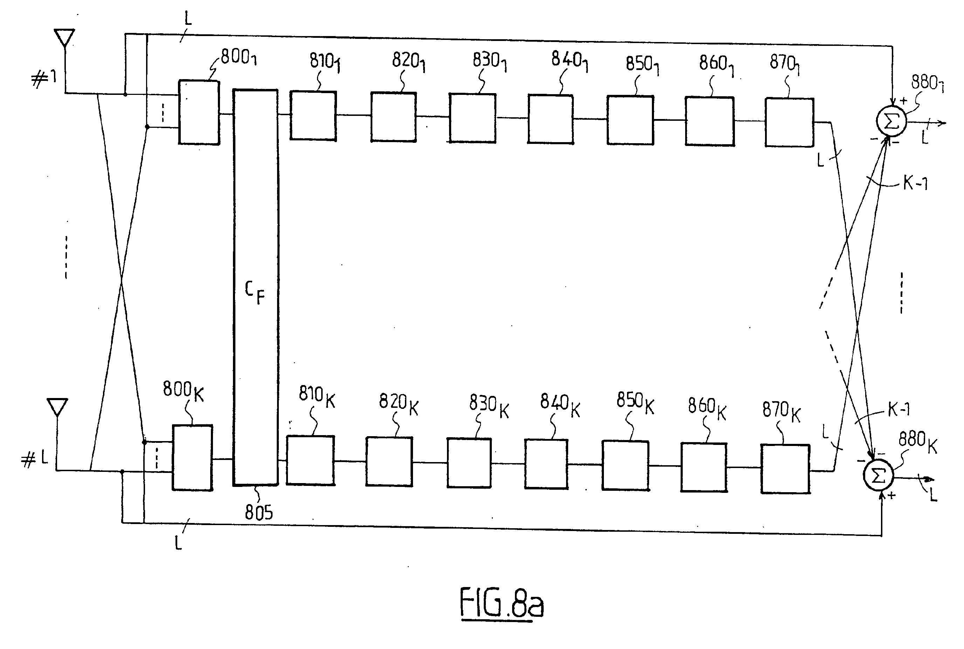

La Fig. 8a représente un dispositif de détection multi-utilisateur selon un quatrième mode de réalisation de l'invention.

Ce mode de réalisation étend le mode d'élimination parallèle au sens où il intègre désormais une fonction de « multi-égalisation » que nous expliciterons plus loin. Les numéros de référence indiqués sont les translatés de ceux de la Fig. 6 lorsqu'ils correspondent à des fonctions identiques. Le dispositif représenté en Fig. 8a diffère néanmoins de celui de la Fig. 6 en ce qu'il comprend un filtre linéaire (805) en amont des modules de décision ($810_k$). Ce filtrage a pour but de prendre en compte les sorties des récepteurs du premier type ou du second type ($800_k$) à différents instants d'échantillonnage dans l'élimination de l'interférence. Le filtre (805) est un filtre temporel linéaire transverse qui joue un rôle équivalent à celui d'un égaliseur linéaire transverse classique lorsqu'un seul utilisateur est considéré. A la différence de ce dernier cependant, le filtre (805) est un filtre matriciel qui opère sur des vecteurs de taille $K$ et utilise donc des matrices de taille KxK au lieu de coefficients scalaires, le nombre de telles matrices correspondant au nombre de prises temporelles du filtre. Les coefficients diagonaux des différentes matrices permettent l'égalisation proprement dite alors que les coefficients hors des diagonales permettent de prendre en compte les réponses temporelles des différents canaux dans la réjection de l'interférence entre utilisateurs. Tout comme son homologue mono-utilisateur le filtre transversal (805) peut être optimisé par une technique connue comme celle de forçage à zéro (Zero Forcing ou ZF) ou de minimisation de l'erreur quadratique moyenne (Minimum Mean Square Error ou MMSE).

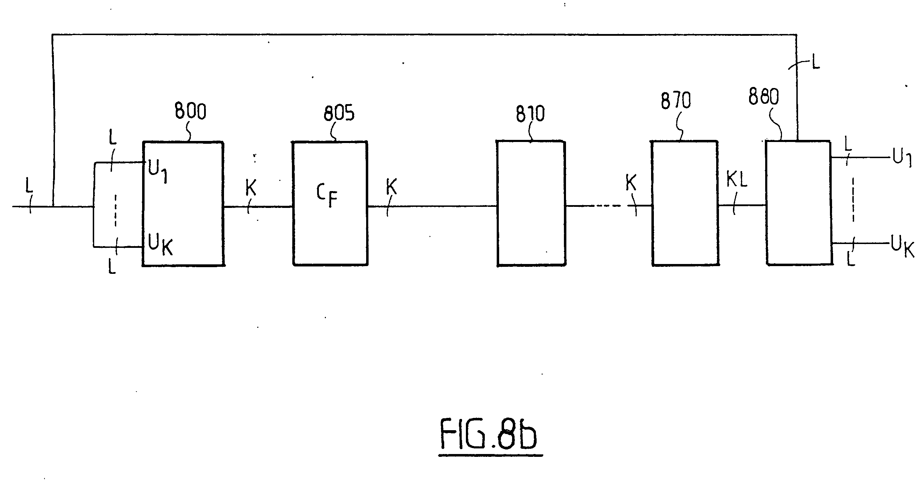

La Fig. 8b représente de manière équivalente le dispositif de la Fig. 8a en faisant ressortir le caractère de traitement vectoriel des différents modules (800) à (880) chaque module intégrant respectivement les modules ($800_1$,..., $800_K$),...($880_1$,...,$880_K$) de la Fig. 8a (par exemple, le module (800) est une batterie de récepteurs du premier ou du second type). Le filtre matriciel (805) reste bien entendu inchangé.

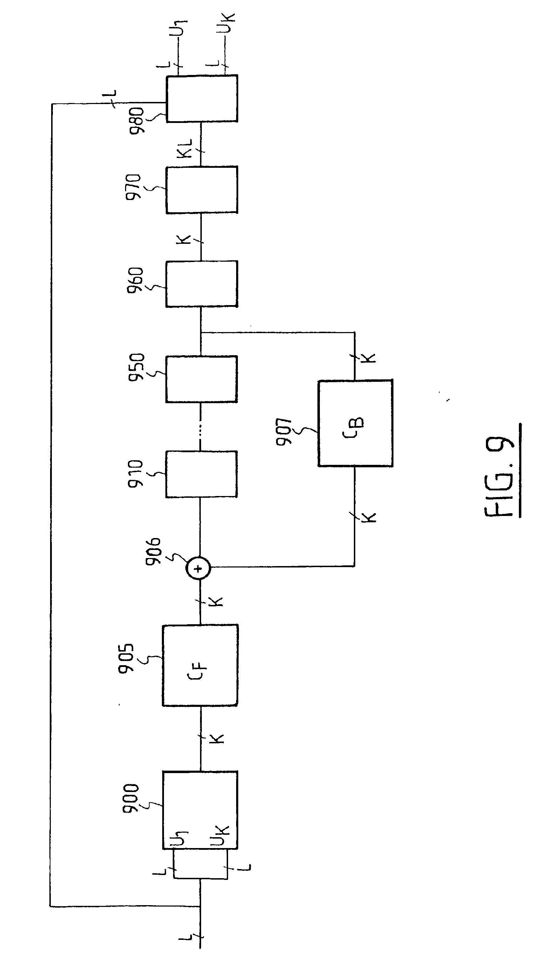

La Fig. 9 représente un dispositif de détection multi-utilisateur selon un cinquième mode de réalisation de l'invention.

Ce mode de réalisation transpose la technique d'égalisation par retour de décision (Decision Feedback ou DF) au contexte multi-utilisateur. Les modules (900), (910),...(980) sont des modules identiques aux modules (800), (810),..., (880) de la Fig. 8, chaque module opérant, on l'a dit, sur un vecteur à K composantes. Le dispositif comprend un filtre transverse précurseur (905) identique au filtre (805) et un filtre postcurseur (907) filtrant le vecteur des symboles $\hat{s}'_k$ en sortie du module (950). La sortie du filtre postcurseur est soustraite (906) à l'entrée du module de décision (910). L'ensemble constitué par le filtre transverse (905) et le filtre de contre-réaction (907) peut être là aussi optimisé selon une technique connue, ZF ou MMSE par exemple.

Le filtre postcurseur (907) doit être causal de manière à assurer que l'on n'ait pas à retrancher la contribution d'échantillons temporels non encore disponibles au moment de la soustraction à l'échantillon courant. Ceci peut notamment imposer des contraintes sur la longueur de l'entrelacement. Alternativement, le filtre postcurseur (907) filtrera le vecteur de symboles $\hat{s}_k$ en sortie du module de décision (910) ce qui permettra de relaxer la contrainte de causalité au prix toutefois de l'abandon du bénéfice du décodage canal dans l'évaluation de l'interférence inter-symbole par le filtre postcurseur.

Les modes de réalisation illustrés en Fig. 8a,b et 9 utilisent tous deux une « multi-égalisation » dérivée de l'égalisation mono-utilisateur symbole par symbole. Il est cependant clair pour l'homme du métier que l'invention est également susceptible de généralisation à la famille des techniques d'égalisation à estimation de séquences de symboles, à savoir MLSE (Maximum Likelihood Sequence Estimation), DDFSE (Delayed Decision Feedback Sequence Estimation), RSSE (Reduced State Sequence Estimation) etc. Toutes ces techniques sont également transposables au moyen de l'invention à la situation multi-utilisateur.

Bien que l'invention ait été essentiellement illustrée, pour des raisons de commodité au moyen de modules exécutant certaines fonctions, il est clair cependant que toutes ou une partie seulement de ces fonctions peuvent être exécutées par un processeur programmé à cet effet.

**Revendications**

1. Méthode de détection multi-utilisateur avec élimination d'interférence entre utilisateurs, chaque utilisateur transmettant des données modulées sous forme de symboles sur un canal de transmission, chaque canal de transmission ($k$) comprenant au moins un trajet de propagation ($i$) et chaque trajet de propagation arrivant sur un réseau d'antennes ($\ell$) de réception selon une direction d'arrivée ($\theta_{i,k}$), la méthode comprenant au moins une séquence d'étapes pour chaque utilisateur ($k$), chaque séquence comprend :

   (a) une étape de réception (600k,700k,800k,800,900) décomposant chaque signal d'antenne en des signaux filtrés ($x_{\ell,i,k}$) issus des différents trajets ($i$) dudit utilisateur ($k$) et combinant lesdits signaux filtrés au moyen d'une première pluralité de coefficients ($b_{\ell,i,k}$, $c_{i,k}$) obtenus de manière adaptative pour former une estimation ($z_k$) du signal transmis par l'utilisateur ;
   (b) une étape d'estimation (670k,770k,870k,870,970) de la contribution (($x_{\ell,k}$) $\ell$=1..$L$) de l'utilisateur aux signaux reçus par les différentes antennes à partir de ladite estimation du signal transmis ;
   (c) une étape d'élimination d'interférence (680k',780k,880k,880,980) soustrayant aux signaux d'antennes la contribution estimée à l'étape (b) pour obtenir des signaux d'antennes épurés ;

   les signaux d'antennes épurés fournis par au moins une première séquence étant utilisés comme signaux d'antennes par au moins une seconde séquence
   **caractérisée en ce qu'**à l'étape b), l'estimation de la contribution de l'utilisateur est faite à partir d'une seconde pluralité ($u_{i,k}$, $w_{\ell,i,k}$) de coefficients qui sont obtenus à partir de ladite première pluralité de coefficients ($b_{\ell,i,k}$, $c_{i,k}$) obtenus de manière adaptative.

2. Méthode de détection multi-utilisateur selon la revendication 1, **caractérisée en ce que** la première pluralité de coefficients comprend un premier jeu de coefficients complexes ($b_{\ell,i,k}$) et un second jeu de coefficients complexes ($c_{i,k}$) et que les signaux filtrés ($x_{\ell,i,k}$) sont soumis à une étape (420k) de formation de voie pour former des signaux de trajets ($y_{i,k}$) au moyen dudit premier jeu, lesdits signaux de trajets étant ensuite linéairement combinés (440k) au moyen dudit second jeu pour fournir ladite estimation ($z_k$) du signal transmis, les coefficients dudit premier jeu étant adaptés de manière à minimiser une pluralité de premiers signaux d'erreur ($\varepsilon'_{i,k}$) entre une valeur de consigne ($q_k$) du signal transmis et lesdits signaux de trajets ($y_{i,k}$), les coefficients dudit second jeu étant adaptés de manière à minimiser un second signal d'erreur ($\varepsilon''_k$) entre ladite estimation ($z_k$) et ladite valeur de consigne.

3. Méthode de détection multi-utilisateur selon la revendication 2, **caractérisée en ce que** ladite seconde pluralité ($w_{\ell,i,k}$, $u_{i,k}$) de coefficients comprend un premier jeu de coefficients complexes ($w_{\ell,i,k}$) et un second jeu ($u_{i,k}$) de coefficients complexes, les coefficients ($w_{\ell,i,k}$) dudit premier jeu de la seconde pluralité étant obtenus à partir des arguments des coefficients ($b_{\ell,i,k}$) du premier jeu de la première pluralité et les coefficients ($u_{i,k}$) dudit second jeu de la seconde pluralité étant obtenus à partir des coefficients ($c_{i,k}$) dudit second jeu de la première pluralité.

4. Méthode de détection multi-utilisateur selon la revendication 3, **caractérisée en ce que** les coefficients ($u_{i,k}$) dudit second jeu de la seconde pluralité étant obtenus par conjugaison des coefficients ($c_{i,k}$) dudit second jeu de la première pluralité.

5. Méthode de détection multi-utilisateur selon la revendication 3 ou 4, **caractérisée en ce que** les coefficients ($w_{\ell,i,k}$) dudit premier jeu de la seconde pluralité sont obtenus à partir d'une régression linéaire sur les arguments des coefficients ($b_{\ell,i,k}$) du premier jeu de la première pluralité.

6. Méthode de détection multi-utilisateur selon l'une des revendications 2 à 5, **caractérisée en ce qu'**à la première séquence,
   les coefficients ($b_{\ell,i,k}$) du premier jeu de la première pluralité sont initialisés par $b_{\ell,i,k}(0)=\delta(\ell-\ell_0)$, $\forall i$ où $\delta$ est le symbole de Dirac, $\ell_0$ est un numéro d'antenne;
   et que les coefficients ($c_{i,k}$) du second jeu de la première pluralité sont initialisés par $c_{i,k}(0)=c$, $\forall i$ où $c$ est un coefficient complexe donné.

7. Méthode de détection multi-utilisateur selon l'une des revendications 2 à 5, **caractérisée en ce qu'**à la première séquence, les coefficients ($b_{\ell,i,k}$) du premier jeu de la première pluralité sont initialisés par $b_{\ell,i,k}(0)=\exp(-j(\hat{v}_{i,k}(0)+2\pi d/\lambda.\cos\hat{\theta}_{i,k}(0).(\ell-1)))$ et que les coefficients ($c_{i,k}$) du second jeu de la première pluralité sont initialisés par $c_{i,k}(0)=\hat{\alpha}_{i,k}(0)$ où $\hat{\theta}_{i,k}(0)$, $\hat{v}_{i,k}(0)$, $\hat{\alpha}_{i,k}(0)$ sont respectivement des estimations des directions d'arrivée, rotations de phase et coefficients d'atténuation pour les différents trajets.

**8.** Méthode de détection multi-utilisateur selon la revendication 1, **caractérisée en ce que** la première pluralité de coefficients est constituée par un jeu de coefficients complexes ($b_{\ell,i,k}$) et que les signaux filtrés ($x_{\ell,i,k}$) sont linéairement combinés ($520_k$) au moyen dudit jeu pour fournir ladite estimation ($z_k$) du signal transmis, les coefficients dudit jeu étant adaptés de manière à minimiser un signal d'erreur ($\varepsilon_k$) entre ladite estimation ($z_k$) et une valeur de consigne ($q_k$).

**9.** Méthode de détection multi-utilisateur selon la revendication 8, **caractérisée en ce que** ladite seconde pluralité ($w_{\ell,i,k}$, $u_{i,k}$) de coefficients comprend un premier jeu de coefficients complexes ($w_{\ell,i,k}$) et un second jeu de coefficients complexes ($u_{i,k}$), les coefficients ($u_{i,k}$) dudit second jeu de la seconde pluralité étant obtenus par :

$u_{i,k}=g_{i,k}/g_k$ où $g_{i,k}$ est une estimation de la norme du sous-vecteur $\overline{\mathbf{b}}_{i,k}=\begin{pmatrix} b_{1,i,k} \\ b_{2,i,k} \\ . \\ . \\ b_{L,i,k} \end{pmatrix}$, L étant le nombre d'antennes du réseau, et où $g_k$ est une moyenne des $g_{i,k}$ sur les différents trajets, les coefficients ($w_{\ell,i,k}$) dudit premier jeu de la seconde pluralité étant obtenus à partir des arguments des coefficients ($b_{\ell,i,k}$) dudit jeu de la première pluralité.

**10.** Méthode de détection multi-utilisateur selon la revendication 8 ou 9, **caractérisée en ce qu'**à la première séquence, les coefficients ($b_{\ell,i,k}$) dudit jeu de la première pluralité sont initialisés par $b_{\ell,i,k}(0)=b\cdot\delta(\ell-\ell_0)$, $\forall i$ où $\delta$ est le symbole de Dirac, $\ell_0$ est un numéro d'antenne et $b$ un coefficient complexe donné.

**11.** Méthode de détection multi-utilisateur selon la revendication 8 ou 9, **caractérisée en ce qu'**à la première séquence, les coefficients ($b_{\ell,i,k}$) dudit jeu de la première pluralité sont initialisés par $b_{\ell,i,k}(0)=\hat{\alpha}_{i,k}(0).\exp(-j(\hat{v}_{i,k}(0)+2\pi d/\lambda.\cos\hat{\theta}_{i,k}(0).(\ell-1)))$ où $\hat{\theta}_{i,k}(0)$, $\hat{v}_{i,k}(0)$, $\hat{\alpha}_{i,k}(0)$ sont respectivement des estimations des directions d'arrivée, rotations de phase et coefficients d'atténuation pour les différents trajets.

**12.** Méthode de détection multi-utilisateur selon l'une des revendications précédentes, **caractérisée en ce que**, pour un utilisateur donné ($k$), l'interférence est éliminée en soustrayant ($680_k,880_k,880,980$) aux signaux d'antennes les contributions de tous les autres utilisateurs.

**13.** Méthode de détection multi-utilisateur selon la revendication 12, **caractérisée en ce que** chaque séquence comprend une étape d'estimation ($610_k,710_k,810_k,810,910$) des symboles transmis à partir de l'estimation du signal transmis ($z_k$) pour obtenir des premiers symboles estimés ($\hat{s}_k$), une étape de démodulation ($620_k,720_k,820_k,820,920$) des premiers symboles estimés ($\hat{s}_k$) pour obtenir des données estimées ($\hat{d}_k$), une étape de décodage canal ($630_k,730_k,830_k,830,930$) desdites données estimées suivi d'un recodage canal ($640_k,740_k,840_k,840,940$) et d'une re-modulation ($650_k,750_k,850_k,850,950$) pour obtenir des seconds symboles estimés ($\hat{s}'_k$).

**14.** Méthode de détection multi-utilisateur selon la revendication 2 et 13, ou 8 et 13, **caractérisée en ce que** la valeur de consigne ($q^{(n)}_k$) pour un signal transmis, utilisée à la seconde séquence ou à une séquence ultérieure ($n$), est le second symbole estimé ($\hat{s}'^{(n-1)}_k$) obtenu pour ce signal à la séquence précédente.

**15.** Méthode de détection multi-utilisateur selon la revendication 2 et 14, ou 8 et 14, **caractérisée en ce que** la valeur de consigne ($q^{(n)}_k$) pour un signal transmis, utilisée à la seconde séquence ou à une séquence ultérieure ($n$), est une combinaison du premier symbole estimé ($\hat{s}^{(n)}_k$) obtenu pour ce signal à la séquence courante et du second symbole estimé ($\hat{s}'^{(n-1)}_k$) obtenu pour ce signal à la séquence précédente.

**16.** Méthode de détection multi-utilisateur selon l'une des revendications précédentes, **caractérisée en ce qu'**à la seconde séquence et aux séquences ultérieures, les coefficients de la première pluralité d'une séquence sont initialisés à partir des valeurs de coefficients de la première pluralité de la séquence précédente.

**17.** Méthode de détection multi-utilisateur selon l'une des revendications 1 à 11, **caractérisée en ce que** les utilisateurs sont classés par ordre de puissance reçue et que l'interférence est éliminée en soustrayant ($780_k$) l'une après l'autre les contributions des différents utilisateurs en commençant par les utilisateurs de plus fortes puissances reçues.

**18.** Méthode de détection multi-utilisateur selon la revendication 6 et 17, **caractérisée en ce que**, pour chaque séquence d'un utilisateur ($k$), les coefficients ($b_{\ell,i,k}$) du premier jeu de la première pluralité sont initialisés par $b_{\ell,i,k}(0)=\delta(\ell-\ell_0)$, $\forall i$ où $\delta$ est le symbole de Dirac, $\ell_0$ est un numéro d'antenne;

et que les coefficients ($c_{i,k}$) du second jeu de la première pluralité sont initialisés par $c_{i,k}(0)$=c, $\forall i$ où $c$ est un coefficient complexe donné.

**19.** Méthode de détection multi-utilisateur selon la revendication 7 et 17, **caractérisée en ce que**, pour chaque séquence d'un utilisateur ($k$), les coefficients ($b_{\ell,i,k}$) du premier jeu de la première pluralité sont initialisés par

$$b_{\ell,i,k}(0)=\exp(-j(\hat{v}_{i,k}(0)+2\pi d/\lambda.\cos\hat{\theta}_{i,k}(0).(\ell-1)))$$

et que les coefficients ($c_{i,k}$) du second jeu de la première pluralité sont initialisés par $c_{i,k}(0)=\hat{\alpha}_{i,k}(0)$ où $\hat{\theta}_{i,k}(0)$, $\hat{v}_{i,k}(0)$, $\hat{\alpha}_{i,k}(0)$ sont respectivement des estimations des directions d'arrivée, rotations de phase et coefficients d'atténuation pour les différents trajets.

**20.** Méthode de détection multi-utilisateur selon la revendication 10 et 17, **caractérisée en ce que**, pour chaque séquence d'un utilisateur ($k$), les coefficients ($b_{\ell,i,k}$) dudit jeu de la première pluralité sont initialisés par $b_{\ell,i,k}(0)=b\cdot\delta(\ell-\ell_0)$, $\forall i$ où $\delta$ est le symbole de Dirac, $\ell_0$ est un numéro d'antenne et $b$ un coefficient complexe donné.

**21.** Méthode de détection multi-utilisateur selon la revendication 11 et 17, **caractérisée en ce que**, pour chaque séquence d'un utilisateur ($k$), les coefficients ($b_{\ell,i,k}$) dudit jeu de la première pluralité sont initialisés par $b_{\ell,i,k}(0)=\hat{\alpha}_{i,k}(0).\exp(-j(\hat{v}_{i,k}(0)+2\pi d/\lambda.\cos\hat{\theta}_{i,k}(0).(\ell-1)))$ où $\hat{\theta}_{i,k}(0)$, $\hat{v}_{i,k}(0)$, $\hat{\alpha}_{i,k}(0)$ sont respectivement des estimations des directions d'arrivée, rotations de phase et coefficients d'atténuation pour les différents trajets.

**22.** Méthode de détection multi-utilisateur selon la revendication 12, **caractérisée en ce que** les estimations des signaux transmis des utilisateurs étant considérées comme un vecteur d'estimations à K composantes où K est le nombre d'utilisateurs, ledit vecteur est soumis à un filtrage matriciel transverse (805,905).

**23.** Méthode de détection multi-utilisateur selon la revendication 22, **caractérisée en ce que** les symboles estimés des utilisateurs étant considérés comme un vecteur de symboles à K composantes, ledit vecteur de symboles est soumis à un filtrage matriciel postcurseur (907) et la sortie de ce filtrage est soustraite, vecteur à vecteur, à la sortie du filtrage matriciel transverse (905).

**24.** Dispositif de détection multi-utilisateur **caractérisé en ce qu'**il comprend des moyens adaptés à mettre en oeuvre la méthode selon l'une des revendications précédentes.

**Claims**

**1.** Multi-user detection method with elimination of interference between users, each user transmitting modulated data in the form of symbols on a transmission channel, each transmission channel ($k$) comprising at least one propagation path ($i$) and each propagation path arriving at an array of reception antennae ($l$) according to a direction of arrival ($\theta_{i,k}$), the method comprising at least one sequence of steps for each user ($k$), each sequence comprising:

(a) a reception step (600k,700k,800k,800,900) decomposing each antenna signal into filtered signals ($x_{l,i,k}$) issuing from the different paths (i) of said user (k) and combining said filtered signals by means of a first plurality of coefficients ($b_{l,i,k}$, $c_{i,k}$) obtained in adaptive fashion in order to form an estimation ($z_k$) of the signal transmitted by the user;

(b) a step of estimating (670$_k$,770$_k$,870$_k$,870,970) the contribution (($x_{l,k}$)$l$= 1... $L$) of the user to the signals received by the different antennae from said estimation of the signal transmitted;

(c) a step of eliminating interference (680$_{k'}$,780$_k$,880$_k$,880,980) subtracting from the antenna signals the contribution estimated at step (b) in order to obtain cleaned antenna signals;

the cleaned antenna signals supplied by at least one first sequence being used as antenna signals by at least one second sequence,

**characterised in that** in step b), the estimation of the contribution of the user is made on the basis of a second plurality ($u_{i,k}$, $w_{l,i,k}$) of coefficients which are obtained from said first plurality of coefficients ($b_{l,i,k}$, $c_{i,k}$) obtained in adaptive fashion.

**2.** Multi-user detection method according to claim 1, **characterised in that** the first plurality of coefficients comprises a first set of complex coefficients ($b_{l,i,k}$) and a second set of complex coefficients ($c_{i,k}$) and that the filtered signals ($x_{l,i,k}$) are subjected to a channel formation step ($420_k$) in order to form signals of paths ($y_{i,k}$) by means of said first set, said path signals then being linearly combined ($440_k$) by means of said second set in order to supply said estimation ($z_k$) of the signal transmitted, the coefficients of said first set being adapted so as to minimise a plurality of first error signals ($\varepsilon'_{i,k}$) between a reference value ($q_k$) of the transmitted signal and said path signals ($y_{i,k}$), the coefficients of said second set being adapted so as to minimise a second error signal ($\varepsilon''_k$) between said estimation ($z_k$) and said reference value.

**3.** Multi-user detection method according to claim 2, **characterised in that** said second plurality ($w_{l,i,k}$, $u_{i,k}$) of coefficients comprises a first set of complex coefficients ($w_{l,i,k}$) and a second set of complex coefficients ($u_{i,k}$), the coefficients ($w_{l,i,k}$) of said first set of the second plurality being obtained from the arguments of the coefficients ($b_{l,i,k}$) of the first set of the first plurality and the coefficients ($u_{i,k}$) of said second set of the second plurality being obtained from the coefficients ($c_{i,k}$) of said second set of the first plurality.

**4.** Multi-user detection method according to claim 3, **characterised in that** the coefficients ($u_{i,k}$) of said second set of the second plurality are obtained by conjugation of the coefficients ($c_{i,k}$) of said second set of the first plurality.

**5.** Multi-user detection method according to claim 3 or 4, **characterised in that** the coefficients ($w_{l,i,k}$) of said first set of the second plurality are obtained from a linear regression on the arguments of the coefficients ($b_{l,i,k}$) of the first set of the first plurality.

**6.** Multi-user detection method according to one of claims 2 to 5, **characterised in that** at the first sequence, the coefficients ($b_{l,i,k}$) of the first set of the first plurality are initialised by $b_{l,i,k}(0)=\delta(l\text{-}lo)$, $\forall\,i$ where $\delta$ is the Dirac symbol, and $lo$ is an antenna number; and that the coefficients ($c_{i,k}$) of the second set of the first plurality are initialised by $c_{i,k}(0)=c$, $\forall\,i$ where $c$ is a given complex coefficient.

**7.** Multi-user detection method according to one of claims 2 to 5, **characterised in that** at the first sequence, the coefficients ($b_{l,i,k}$) of the first set of the first plurality are initialised by $b_{l,i,k}(0)=\exp(\text{-}j(\hat{v}_{i,k}(0)+2\pi d/\lambda.\cos\hat{\theta}_{i,k}(0).(l\text{-}1)))$ and that the coefficients ($c_{i,k}$) of the second set of the first plurality are initialised by $c_{i,k}(0)=\hat{\alpha}_{i,k}(0)$ where $\hat{\theta}_{i,k}(0)$, $\hat{v}_{i,k}(0)$, $\hat{\alpha}_{i,k}(0)$ are respectively estimations of the directions of arrival, phase rotations and coefficients of attenuation for the different paths.

**8.** Multi-user detection method according to claim 1, **characterised in that** the first plurality of coefficients is constituted by a set of complex coefficients ($b_{l,i,k}$) and the filtered signals ($x_{l,i,k}$) are linearly combined ($520_k$) by means of said set in order to supply said estimation ($z_k$) of the signal transmitted, the coefficients of said set being adapted so as to minimise any error signal ($\varepsilon_k$) between said estimation ($z_k$) and a reference value ($q_k$).

**9.** Multi-user detection method according to claim 8, **characterised in that** said second plurality ($w_{l,i,k}$, $u_{i,k}$) of coefficients comprises a first set of complex coefficients ($w_{l,i,k}$) and a second set of complex coefficients ($u_{i,k}$), the coefficients ($u_{i,k}$) of said second set of the second plurality being obtained by:

$u_{i,k}=g_{i,k}/g_k$ where $g_{i,k}$ is an estimation of the norm of the sub-vector

$$\overline{b}_{i,k}=\begin{vmatrix} b_{1,i,k} \\ b_{2,i,k} \\ . \\ . \\ b_{L,i,k} \end{vmatrix}$$

L being the number of antennae in the array, and where $g_k$ is a mean of the $g_{i,k}$ values on the different paths, the coefficients ($w_{l,i,k}$) of said first set of the second plurality being obtained from the arguments of the coefficients ($b_{l,i,k}$) of said set of the first plurality.

10. Multi-user detection method according to claim 8 or 9, **characterised in that** at the first sequence, the coefficients ($b_{l,i,k}$) of said set of the first plurality are initialised by $b_{l,i,k}(0)=b.\delta(l-lo)$, $\forall$ $i$ where $\delta$ is the Dirac symbol, $lo$ is an antenna number and $b$ a given complex coefficient.

11. Multi-user detection method according to claim 8 or 9, **characterised in that** at the first sequence, the coefficients ($b_{l,i,k}$) of said set of the first plurality are initialised by $b_{l,i,k}(0)=\hat{\alpha}_{i,k}(0).\exp(-j(\hat{v}_{i,k}(0)+2\pi d/\lambda.\cos\hat{\theta}_{i,k}(0).(l-1)))$ where $\hat{\theta}_{i,k}(0)$, $\hat{v}_{i,k}(0)$, $\hat{\alpha}_{i,k}(0)$ are respectively estimations of the directions of arrival, phase rotations and coefficients of attenuation for the different paths.

12. Multi-user detection method according to one of the preceding claims, **characterised in that** for a given user ($k$), the interference is eliminated by subtracting ($680_k,880_k,880,980$) from the antenna signals the contributions of all the other users.

13. Multi-user detection method according to claim 12, **characterised in that** each sequence comprises a step of estimating ($610_k,710k,810k,810,910$) the symbols transmitted from the estimation of the signal transmitted ($z_k$) in order to obtain first estimated signals ($\hat{s}k$), a step of demodulating ($620_k,720_k,820_k,820,920$) the first estimated symbols ($\hat{s}k$) in order to obtain estimated data ($\hat{d}_k$), a step of channel decoding ($630_k,730_k,830_k,830,930$) of said estimated data followed by a channel recoding ($640_k,740_k,840_k,840,940$) and a remodulation ($650_k, 750_k, 850_k, 850, 950$) in order to obtain the second estimated symbols ($\hat{s}'k$).

14. Multi-user detection method according to claims 2 and 13, or 8 and 13, **characterised in that** the reference value ($q^{(n)}_k$) for a transmitted signal, used at the second sequence or at a subsequent sequence ($n$), is the second estimated symbol ($\hat{s}'^{(n-1)}_k$) obtained for this signal at the previous sequence.

15. Multi-user detection method according to claim 2 and 14, or 8 and 14, **characterised in that** the reference value ($q^{(n)}_k$) for a transmitted signal, used at the second sequence or at a subsequent sequence ($n$), is a combination of the first estimated symbol ($\hat{s}^{(n)}_k$) obtained for this signal at the current sequence and of the second estimated symbol ($\hat{s}'^{(n-1)}_k$) obtained for this signal at the previous sequence.

16. Multi-user detection method according to one of the preceding claims, **characterised in that** at the second sequence and at the subsequent sequences, the coefficients of the first plurality of a sequence are initialised from the values of coefficients of the first plurality of the previous sequence.

17. Multi-user detection method according to one of claims 1 to 11, **characterised in that** the users are classified in order of received power and the interference is eliminated by subtracting ($780_k$), one after the other, the contributions of the different users, commencing with the users with the highest received powers.

18. Multi-user detection method according to claims 6 and 17, **characterised in that** for each sequence of a user ($k$), the coefficients ($b_{l,i,k}$) of the first set of the first plurality are initialised by $b_{l,i,k}(0)=\delta(l-lo)$, $\forall$ $i$ where $\delta$ is the Dirac symbol and $lo$ is an antenna number; and that the coefficients ($c_{i,k}$) of the second set of the first plurality are initialised by $c_{i,k}(0)=c$, $\forall$ $i$ where $c$ is a given complex coefficient.

19. Multi-user detection method according to claims 7 and 17, **characterised in that** for each sequence of a user ($k$), the coefficients ($b_{l,i,k}$) of the first set of the first plurality are initialised by $b_{l,i,k}(0)=\exp(-j(\hat{v}_{i,k}(0)+2\pi d/\lambda.\cos\hat{\theta}_{i,k}(0).(l-1)))$ and the coefficients ($c_{i,k}$) of the second set of the first plurality are initialised by $c_{i,k}(0)=\hat{\alpha}_{i,k}(0)$ where $\hat{\theta}_{i,k}(0)$, $\hat{v}_{i,k}(0)$, $\hat{\alpha}_{i,k}(0)$ are respectively estimations of the directions of arrival, phase rotations and coefficients of attenuation for the different paths.

20. Multi-user detection method according to claims 10 and 17, **characterised in that** for each sequence of a user ($k$), the coefficients ($b_{l,i,k}$) of said set of the first plurality are initialised by $b_{l,i,k}(0)=b.\delta(l-lo)$, $\forall$ $i$ where $\delta$ is the Dirac symbol, $lo$ is an antenna number and $b$ a given complex coefficient.

21. Multi-user detection method according to claims 11 and 17, **characterised in that** for each sequence of a user ($k$), the coefficients ($b_{l,i,k}$) of said set of the first plurality are initialised by $b_{l,i,k}(0)=\hat{\alpha}_{i,k}(0).\exp(-j(\hat{v}_{i,k}(0)+2\pi d/\lambda.\cos\theta_{i,k}(0).$

($l$-1))) where $\hat{\theta}_{i,k}(0)$, $\hat{v}_{i,k}(0)$, $\hat{\alpha}_{i,k}(0)$ are respectively estimations of the directions of arrival, phase rotations and coefficients of attenuation for the different paths.

22. Multi-user detection method according to claim 12, **characterised in that**, the estimations of the transmitted signals of the users being considered as an estimations vector with K components, where K is the number of users, said vector is subjected to a transverse matrix filtering (805, 905).

23. Multi-user detection method according to claim 22, **characterised in that**, the estimated symbols of the users being considered as a symbols vector with K components, said symbols vector is subjected to post-cursor matrix filtering (907), and the output of this filtering is subtracted, vector by vector, from the output of the transverse matrix filtering (905).

24. Multi-user detection device, **characterised in that** it comprises means suitable to implement the method according to one of the preceding claims.

**Patentansprüche**

1. Verfahren zur Mehrnutzerdetektion mit Störungs- bzw. Interferenzunterdrückung unter den Benutzern, wobei jeder Benutzer modulierte Daten in Form von Symbolen auf einem Übertragungskanal überträgt, wobei jeder Übertragungskanal (k) mindestens einen Ausbreitungsweg (i) umfasst und jeder Ausbreitungsweg bei einer Empfangsantennenanordnung ($\ell$) in einer Eingangsrichtung ($\theta_{i,k}$) ankommt, wobei das Verfahren mindestens eine Arbeitsschrittsequenz für jeden Benutzer (k) umfasst, wobei jede Sequenz folgendes umfasst:

(a) einen Empfangsschritt (600k, 700k, 800k, 800, 900), der jedes Antennensignal in gefilterte Signale ($x_{\ell,i,k}$) zerlegt, die aus den verschiedenen Wegen (i) des Benutzers (k) stammen, und die gefilterten Signale mittels einer ersten Vielzahl von Koeffizienten ($b_{\ell,i,k}$, $c_{i,k}$) kombiniert, die adaptiv erzielt wurden, um eine Schätzung ($z_k$) des von dem Benutzer übertragenen Signals zu bilden;
(b) einen Schätzungsschritt (670$_k$, 770$_k$, 870$_k$, 870, 970) des Beitrags (($x_{\ell,k}$) $\ell$=1...L) des Benutzers zu den Signalen, die von den verschiedenen Antennen empfangen werden, ausgehend von der Schätzung des übertragenen Signals;
(c) einen Störungs- bzw. Interferenzunterdrückungsschritt (680$_k$, 780$_k$, 880$_k$, 880, 980), der von den Antennensignalen den im Schritt (b) geschätzten Beitrag abzieht, um bereinigte Antennensignale zu erzielen;
wobei die bereinigten Antennensignale, die von mindestens einer ersten Sequenz bereitgestellt werden, als Antennensignal von mindestens einer zweiten Sequenz verwendet werden,
**dadurch gekennzeichnet, dass** im Schritt b) die Schätzung des Beitrags des Benutzers ausgehend von einer zweiten Vielzahl von Koeffizienten ($u_{i,k}$, $w_{\ell,i,k}$) erfolgt, die aus der ersten Vielzahl von Koeffizienten ($b_{\ell,i,k}$, $c_{i,k}$) erzielt wird, die adaptiv erzielt werden.

2. Verfahren zur Mehrnutzerdetektion nach Anspruch 1, **dadurch gekennzeichnet, dass** die erste Koeffizientenvielzahl einen ersten Satz komplexer Koeffizienten ($b_{\ell,i,k}$) und einen zweiten Satz komplexer Koeffizienten ($c_{i,k}$) umfasst, und dass die gefilterten Signale ($x_{\ell,i,k}$) einem Pfadbildungsschritt (420$_k$) zum Bilden der Wegsignale ($y_{i,k}$) mittels des ersten Satzes unterzogen werden, wobei die Wegsignale anschließend mittels des zweiten Satzes linear kombiniert (440$_k$) werden, um die Schätzung ($z_k$) des übertragenen Signals bereitzustellen, wobei die Koeffizienten des ersten Satzes dazu geeignet sind, eine Vielzahl erster Fehlersignale ($\varepsilon'_{i,k}$) zwischen einem Sollwert ($q_k$) des übertragenen Signals und den Wegsignalen ($y_{i,k}$) zu minimieren, wobei die Koeffizienten des zweiten Satzes dazu geeignet sind, ein zweites Fehlersignal ($\varepsilon''_k$) zwischen der Schätzung ($z_k$) und dem Sollwert zu minieren.

3. Verfahren zur Mehrnutzerdetektion nach Anspruch 2, **dadurch gekennzeichnet, dass** die zweite Vielzahl von Koeffizienten ($w_{\ell,i,k}$, $u_{i,k}$) einen ersten Satz komplexer Koeffizienten ($w_{\ell,i,k}$) und einen zweiten Satz komplexer Koeffizienten ($u_{i,k}$) umfasst, wobei die Koeffizienten ($w_{\ell,i,k}$) des ersten Satzes aus den Argumenten der Koeffizienten ($b_{\ell,i,k}$) des ersten Satzes der ersten Vielzahl erzielt werden und die Koeffizienten ($u_{i,k}$) des zweiten Satzes der zweiten Vielzahl aus den Koeffizienten ($c_{i,k}$) des zweiten Satzes der ersten Vielzahl erzielt werden.

4. Verfahren zur Mehrnutzerdetektion nach Anspruch 3, **dadurch gekennzeichnet, dass** die Koeffizienten ($u_{i,k}$) des zweiten Satzes der zweiten Vielzahl durch Konjugation der Koeffizienten ($c_{i,k}$) des zweiten Satzes der ersten Vielzahl erzielt werden.

**5.** Verfahren zur Mehrnutzerdetektion nach Anspruch 3 oder 4, **dadurch gekennzeichnet, dass** die Koeffizienten $(w_{\ell,i,k})$ des ersten Satzes der zweiten Vielzahl aus einer linearen Regression über die Argumente der Koeffizienten $(b_{\ell,i,k})$ des ersten Satzes der ersten Vielzahl erzielt werden.

**6.** Verfahren zur Mehrnutzerdetektion nach einem der Ansprüche 2 bis 5, **dadurch gekennzeichnet, dass** in der ersten Sequenz

die Koeffizienten $(b_{\ell,i,k})$ des ersten Satzes der ersten Vielzahl durch $b_{\ell,i,k}(0) = \delta(\ell-\ell_0), \forall i$ initialisiert werden, wobei $\delta$ das Dirac-Symbol ist und $\ell_0$ eine Antennennummer ist;

und die Koeffizienten $(c_{i,k})$ des zweiten Satzes der ersten Vielzahl durch $c_{i,k}(0) = c, \forall i$ initialisiert werden, wobei c ein gegebener komplexer Koeffizient ist.

**7.** Verfahren zur Mehrnutzerdetektion nach einem der Ansprüche 2 bis 5, **dadurch gekennzeichnet, dass** bei der ersten Sequenz die Koeffizienten $(b_{\ell,i,k})$ des ersten Satzes der ersten Vielzahl durch $b_{l,i,k}(0)=\exp(-j(\hat{v}_{i,k}(0)+2\pi d/\lambda.\cos\hat{\theta}_{i,k}(0).(l-1)))$ initialisiert werden und die Koeffizienten $(c_{i,k})$ des zweiten Satzes der ersten Vielzahl durch $c_{i,k}(0)=\hat{\alpha}_{i,k}(0)$ initialisiert werden, wobei $\hat{\theta}_{i,k}(0)$, $\hat{v}_{i,k}(0)$, $\hat{\alpha}_{i,k}(0)$ jeweils Schätzungen der Eingangsrichtungen, Phasendrehungen und Dämpfungskoeffizienten für die verschiedenen Wege sind.

**8.** Verfahren zur Mehrnutzerdetektion nach Anspruch 1, **dadurch gekennzeichnet, dass** die erste Koeffizientenvielzahl aus einem Satz komplexer Koeffizienten $(b_{\ell,i,k})$ besteht und die gefilterten Signale $(x_{\ell,i,k})$ mittels des Satzes linear kombiniert $(520_k)$ werden, um die Schätzung $(z_k)$ des übertragenen Signals bereitzustellen, wobei die Koeffizienten des Satzes dazu geeignet sind, ein Fehlersignal $(\varepsilon_k)$ zwischen der Schätzung $(z_k)$ und einem Sollwert $(q_k)$ zu minimieren.

**9.** Verfahren zur Mehrnutzerdetektion nach Anspruch 8, **dadurch gekennzeichnet, dass** die zweite Vielzahl von Koeffizienten $(w_{\ell,i,k}, u_{i,k})$ einen ersten Satz komplexer Koeffizienten $(w_{\ell,i,k})$ und einen zweiten Satz komplexer Koeffizienten $(u_{i,k})$ umfasst, wobei die Koeffizienten $(u_{i,k})$ des zweiten Satzes der zweiten Vielzahl erzielt werden durch:

$u_{i,k} = g_{i,k}/g_k$, wobei $g_{i,k}$ eine Schätzung der Norm des Teilvektors

$$\overline{b}_{i,k}=\begin{pmatrix} b_{1,i,k} \\ b_{2,i,k} \\ \cdot \\ \cdot \\ b_{L,i,k} \end{pmatrix}$$ ist, L die Antennenanzahl der Anordnung ist und $g_k$ ein Mittelwert von $g_{i,k}$ über die verschiedenen Wege ist, wobei die Koeffizienten $(w_{\ell,i,k})$ des ersten Satzes der zweiten Vielzahl aus den Argumenten der Koeffizienten $(b_{\ell,i,k})$ des Satzes der ersten Vielzahl erzielt werden.

**10.** Verfahren zur Mehrnutzerdetektion nach Anspruch 8 oder 9, **dadurch gekennzeichnet, dass** bei der ersten Sequenz die Koeffizienten $(b_{\ell,i,k})$ des Satzes der ersten Vielzahl durch $b_{\ell,i,k}(0) = b\cdot\delta(\ell-\ell_0), \forall i$ initialisiert werden, wobei $\delta$ das Dirac-Symbol ist, $\ell_0$ eine Antennennummer ist und b ein gegebener komplexer Koeffizient ist.

**11.** Verfahren zur Mehrnutzerdetektion nach Anspruch 8 oder 9, **dadurch gekennzeichnet, dass** bei der ersten Sequenz die Koeffizienten $(b_{\ell,i,k})$ **des** Satzes der ersten Vielzahl durch $b_{l,i,k}(0)=\hat{\alpha}_{i,k}(0).\exp(-j(v_{i,k}(0)+2\pi d/\lambda.\cos\hat{\theta}_{i,k}(0).(l-1)))$ initialisiert werden, wobei $\hat{\theta}_{i,k}(0)$, $\hat{v}_{i,k}(0)$, $\hat{\alpha}_{i,k}(0)$ jeweils Schätzungen der Eingangsrichtungen, Phasendrehungen und Dämpfungskoeffizienten für die verschiedenen Wege sind.

**12.** Verfahren zur Mehrnutzerdetektion nach einem der vorhergehenden Ansprüche, **dadurch gekennzeichnet, dass** für einen gegebenen Benutzer (k) die Störung bzw. Interferenz unterdrückt wird, indem von den Antennensignalen die Beiträge aller anderen Benutzer abgezogen ($680_k$, $880_k$, 880, 980) werden.

**13.** Verfahren zur Mehrnutzerdetektion nach Anspruch 12, **dadurch gekennzeichnet, dass** jede Sequenz einen Schritt zum Schätzen ($610_k$, $710_k$, $810_k$, 810, 910) der übertragenen Symbole aus der Schätzung des übertragenen Signals $(z_k)$, um erste geschätzte Symbole $(\hat{s}k)$ zu erzielen, einen Schritt zum Demodulieren ($620_k$, $720_k$, $820_k$, 820, 920) der ersten geschätzten Symbole $(\hat{s}k)$, um geschätzte Daten $(\hat{d}_k)$ zu erzielen, einen Schritt zum kanalmäßigen Decodieren ($630_k$, $730_k$, $830_k$, 830, 930) der geschätzten Daten gefolgt von einem kanalmäßigen Neucodieren

($640_k$, $740_k$, $840_k$, 840, 940) und einem Neumodulieren ($650_k$, $750_k$, $850_k$, 850, 950), um zweite geschätzte Symbole ($\hat{s}k$) zu erzielen, umfasst.

14. Verfahren zur Mehrnutzerdetektion nach Anspruch 2 und 13 oder 8 und 13, **dadurch gekennzeichnet, dass** der Sollwert ($q^{(n)}k$) für ein übertragenes Signal, der bei der zweiten Sequenz oder einer späteren Sequenz (n) verwendet wird, das zweite geschätzte Symbol ($\hat{s}'^{(n-1)}_k$) ist, das für dieses Signal bei der vorhergehenden Sequenz erzielt wurde.

15. Verfahren zur Mehrnutzerdetektion nach Anspruch 2 und 14 oder 8 und 14, **dadurch gekennzeichnet, dass** der Sollwert ($q^{(n)}_k$) für ein übertragenes Signal, der bei der zweiten Sequenz oder einer späteren Sequenz (n) verwendet wird, eine Kombination des ersten geschätzten Symbols ($\hat{s}^{(n)}_k$), das für dieses Signal bei der derzeitigen Sequenz erzielt wird, und des zweiten geschätzten Signals ($\hat{s}'^{(n-1)}_k$), das für dieses Signal bei der vorhergehenden Sequenz erzielt wurde, ist.

16. Verfahren zur Mehrnutzerdetektion nach einem der vorhergehenden Ansprüche, **dadurch gekennzeichnet, dass** bei der zweiten Sequenz und den späteren Sequenzen die Koeffizienten der ersten Vielzahl einer Sequenz aus den Koeffizientenwerten der ersten Vielzahl der vorhergehenden Sequenz initialisiert werden.

17. Verfahren zur Mehrnutzerdetektion nach einem der Ansprüche 1 bis 11, **dadurch gekennzeichnet, dass** die Benutzer nach der empfangenen Leistung eingestuft werden und die Störung bzw. Interferenz unterdrückt wird, indem, beginnend mit den Benutzern mit den stärksten empfangenen Leistungen, nacheinander die Beiträge der verschiedenen Benutzer abgezogen ($780_k$) werden.

18. Verfahren zur Mehrnutzerdetektion nach Anspruch 6 und 17, **dadurch gekennzeichnet, dass** für jede Sequenz eines Benutzers (k) die Koeffizienten ($b_{\ell,i,k}$) des ersten Satzes der ersten Vielzahl durch $b_{\ell,i,k}(0) = \delta(\ell - \ell_0)$, $\forall i$ initialisiert werden, wobei $\delta$ das Dirac-Symbol ist und $\ell_0$ eine Antennennummer ist; und die Koeffizienten ($c_{i,k}$) des zweiten Satzes der ersten Vielzahl durch $c_{i,k}(0) = c$, $\forall i$ initialisiert werden, wobei c ein gegebener komplexer Koeffizient ist.

19. Verfahren zur Mehrnutzerdetektion nach Anspruch 7 und 17, **dadurch gekennzeichnet, dass** für jede Sequenz eines Benutzers (k) die Koeffizienten ($b_{\ell,j,k}$) des ersten Satzes der ersten Vielzahl durch $b_{l,i,k}(0)=\exp(-j(\hat{v}_{i,k}(0)+2\pi d/\lambda.\cos\hat{\theta}_{i,k}(0).(l\text{-}1)))$ initialisiert werden, und die Koeffizienten ($c_{i,k}$) des zweiten Satzes der ersten Vielzahl durch $c_{i,k}(0)=\hat{\alpha}_{i,k}(0)$ initialisiert werden, wobei $\hat{\theta}_{i,k}(0)$, $\hat{v}_{i,k}(0)$, $\hat{\alpha}_{i,k}(0)$ jeweils Schätzungen der Eingangsrichtungen, Phasendrehungen und Dämpfungskoeffizienten für die verschiedenen Wege sind.

20. Verfahren zur Mehrnutzerdetektion nach Anspruch 10 und 17, **dadurch gekennzeichnet, dass** für jede Sequenz eines Benutzers (k) die Koeffizienten ($b_{\ell,i,k}$) des ersten Satzes der ersten Vielzahl durch $b_{\ell,i,k}(0) = b \cdot \delta(\ell - \ell_0)$, $\forall i$ initialisiert werden, wobei $\delta$ das Dirac-Symbol ist, $\ell_0$ eine Antennennummer ist und b ein gegebener komplexer Koeffizient ist.

21. Verfahren zur Mehrnutzerdetektion nach Anspruch 11 und 17, **dadurch gekennzeichnet, dass** für jede Sequenz eines Benutzers (k) die Koeffizienten ($b_{\ell,i,k}$) des Satzes der ersten Vielzahl durch $b_{l,i,k}(0)=\hat{\alpha}_{i,k}(0).\exp(-j(\hat{v}_{i,k}(0)+2\pi d/\lambda.\cos\hat{\theta}_{i,k}(0).(l\text{-}1)))$ initialisiert werden, wobei $\hat{\theta}_{i,k}(0)$, $\hat{v}_{i,k}(0)$, $\hat{\alpha}_{i,k}(0)$ jeweils Schätzungen der Eingangsrichtungen, Phasendrehungen und Dämpfungskoeffizienten für die verschiedenen Wege sind.

22. Verfahren zur Mehrnutzerdetektion nach Anspruch 12, **dadurch gekennzeichnet, dass** die Schätzungen der übertragenen Signale der Benutzer als Schätzungsvektor mit K Komponenten angesehen werden, wobei K die Anzahl der Benutzer ist, wobei der Vektor einer transversalen Matrixfilterung (805, 905) unterzogen wird.

23. Verfahren zur Mehrnutzerdetektion nach Anspruch 22, **dadurch gekennzeichnet, dass** die geschätzten Symbole der Benutzer als Symbolvektor mit K Komponenten angesehen werden, wobei der Symbolvektor einer nachfolgenden Matrixfilterung (907) unterzogen wird und die Ausgabe dieser Filterung von der Ausgabe der transversalen Matrixfilterung (905) vektormäßig abgezogen wird.

24. Vorrichtung zur Mehrnutzerdetektion, **dadurch gekennzeichnet, dass** sie Mittel umfasst, die dazu geeignet sind, das Verfahren nach einem der vorhergehenden Ansprüche umzusetzen.

EP 1 189 361 B1

FIG.1

FIG.2

EP 1 189 361 B1

FIG.3

FIG.4

FIG.5

FIG.6

FIG.7

EP 1 189 361 B1

$\underline{FIG.8a}$

FIG.8b

EP 1 189 361 B1

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 978951 A

- FR 0011160 A

**Littérature non-brevet citée dans la description**

- **Simon Moshavi.** Multi-user detection for DS-CDMA communications. *IEEE Communications Magazine,* Octobre 1996, 124-136

- **M.C. Reed et al.** Iterative Multiuser detection using antenna arrays and FEC on multipath channels. *IEEE Journal on Selected Areas in Communications,* Décembre 1999, vol. 17 (12), 2082-2089
- *Proceedings of the IEEE,* Août 1997, vol. 85 (8), 1195-1245